# EUROPÄISCHE PATENTSCHRIFT

(11) **EP 2 305 389 B1**
(45) Veröffentlichungstag und Bekanntmachung des Hinweises auf die Patenterteilung: **23.04.2014**
(21) Anmeldenummer: 10177428.9
(22) Anmeldetag: 17.09.2010
(51) Int. Cl.: B05D 3/02, C09J 7/02, C09J 133/08, C08J 3/24, C08L 33/08, C08K 5/00

(54) **Montageklebebänder**
Mounting adhesives
Bandes adhésives de montage

(30) Priorität: 02.10.2009 DE 102009048036
(43) Veröffentlichungstag der Anmeldung: 06.04.2011
(60) Teilanmeldung: 13197891.8
(73) Patentinhaber: tesa SE, 20253 Hamburg (DE)
(72) Erfinder: Brandes, Kay, 21259, Otter (DE); Heins, Matthias Dr., 22307, Hamburg (DE); Possel, Esther von, 20357, Hamburg (DE); Prenzel, Alexander Dr., 20259, Hamburg (DE)

(56) Entgegenhaltungen:
- EP-A1- 2 062 951
- EP-A1- 2 192 148
- WO-A1-01/29144
- WO-A1-2005/059052
- WO-A1-2008/111287
- WO-A1-2008/141004
- WO-A1-2009/005118
- US-A- 4 421 822

## Beschreibung

Die Erfindung betrifft doppelseitige Klebebänder, umfassend eine Trägerschicht (Zwischenschicht) sowie auf dieser Trägerschicht angeordnete Haftklebemassenschichten. Die Klebebänder weisen sehr hohe Klebkräfte auf.

Für diverse Anwendungsgebiete, wie beispielsweise im Bausektor, in der industriellen Fertigung von technischen Produkten oder für Montagezwecke, werden zunehmend dicke, aber stark klebende Klebebänder (so genannte "Montagekiebebänder") benötigt. Da die Verklebungen häufig im Außenbereich stattfinden bzw. die verklebten Produkte den äußeren Witterungseinflüssen ausgesetzt sind, sind die Erwartungen an die Eigenschaften derartiger Klebebänder häufig hoch: so soll die Verklebung stark, dauerhaft und witterungsbeständig sein; gefordert wird vielfach eine hohe Feuchtigkeits-, Wärme- und Feuchtwärmebeständigkeit; vorteilhaft sollten die Klebebänder Unebenheiten in der Verklebungsfuge bzw. auf den zu verklebenden Untergründen ausgleichen können, und zunehmend wird auch für dicke Klebebänder eine hohe Transparenz gewünscht (etwa im Bereich der Verklebung von transparenten Materialien wie Gläsern oder Transparenz-Kunststoffen).

Die Klebebänder, die für derartige Zwecke eingesetzt werden, sind für gewöhnlich mit Klebemassen ausgerüstet, bei denen die klebtechnischen Eigenschaften sehr gut abgestimmt sein müssen. So müssen Kohäsion, Anfassklebrigkeit (auch als "Tack" bezeichnet), Fließverhalten und andere Eigenschaften sehr genau justiert werden. Da die technischen Ausformungen der Haftklebemasse, die diese Eigenschaften beeinflussen, auf die einzelnen Eigenschaften häufig gegenläufige Auswirkungen haben, ist die Abstimmung in der Regel schwierig, oder es müssen Kompromisse im Ergebnis hingenommen werden.

Insbesondere für sehr dicke Klebebänder ist es zudem häufig schwierig, sehr homogene Klebebänder zu realisieren; verarbeitungsbedingt sind sehr dicke Klebebänder häufig durch die Schicht hindurch nicht sehr homogen.
Diese Eigenschaft ist aber ebenfalls unerwünscht, da man häufig Klebebänder benötigt, die unabhängig von ihrer Schichtdicke und von der Herstellung wohldefinierte Eigenschaften aufweisen.

Stoffe mit für Haftklebeanwendungen geeigneten viskoelastischen Eigenschaften zeichnen sich dadurch aus, dass sie bei mechanischer Deformation sowohl viskos fließen als auch elastische Rückstellkräfte aufbauen. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Stoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Eigenklebrigkeit (auch als Haftklebrigkeit oder als Tack bezeichnet) und damit oft auch zu einer hohen Klebkraft. Stark vernetzte Systeme, kristalline oder glasartig erstarrte Polymere sind mangels fließfähiger Anteile in der Regel nicht eigenklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Um ein Abfließen (ein Herunterlaufen) der Haftklebemassen vom Substrat zu verhindern und eine genügende Stabilität der Haftklebemasse im Klebeverbund zu garantieren, ist also eine hinreichende Kohäsion der Haftklebemassen erforderlich. Für gute Adhäsionseigenschaften müssen die Haftklebemassen aber andererseits in der Lage sein, auf das Substrat aufzufließen und eine hinreichende Benetzung der Substratoberfläche zu garantieren. Um Brüche innerhalb der Verklebungsfuge (innerhalb der Haftklebemassenschicht) zu vermeiden, ist zudem eine gewisse Elastizität der Haftklebemasse erforderlich.
Um eine hinreichende Kohäsion der Haftklebemassen der Klebebänder zu erreichen, werden die Haftklebemassen in der Regel vernetzt, das heißt die einzelnen Makromoleküle werden durch Brückenbindungen miteinander verknüpft. Die Vernetzung kann auf unterschiedliche Weisen geschehen, so gibt es physikalische und chemische (thermische) Vernetzungsmethoden.
Zur Herstellung homogener Klebebänder ist es von Vorteil, die thermische Vernetzung der Polymere durchzuführen: Es ist ohne weiteres möglich, auch dicke Schichten gleichmäßig mit thermischer Energie zu versorgen. Masseschichten, die durch aktinische Strahlung (beispielsweise ultraviolette Strahlung, Elektronenstrahlen) vernetzt wurden, zeigen hingegen ein Vernetzungsprofil durch die vernetzte Schicht hindurch. Dieses Vernetzungsprofil resultiert daraus, dass die Strahlen nur eine begrenzte Eindringtiefe in die Schicht hinein besitzen, wobei die Intensität der Strahlung zudem mit der Eindringtiefe aufgrund von Absorptionsprozessen abnimmt. Daher sind die außenliegenden Bereiche einer strahlenchemisch vernetzten Masseschicht stärker vernetzt als die weiter innen liegenden Bereiche, wobei die Vernetzungsintensität nach innen abnimmt. Insbesondere für dicke Schichten ist dieser Effekt sehr signifikant.

Verfahrenstechnisch bedingt lassen sich sehr dicke Polymerschichten sehr viel besser aus der Polymer-Schmelze (sogenannte Hotmelts) als aus der Polymer-Lösung herstellen. Da die Schichten durch eine Beschichtung aus der Schmelze hergestellt werden, für eine homogene Verteilung thermischer Vernetzer zur initiierung einer nachfolgenden thermischen Vernetzung eben diese Vernetzer aber vor der Beschichtung zugesetzt werden müssen, ergibt sich das Problem, dass die thermischen Vernetzer den hohen Temperaturen zur Erzeugung der Polymerschmelze ausgesetzt sind und daher bereits vor der Vernetzung zu einer unkontrollierten Polymervernetzung (sogenannte Vergelung) führen. Um diese Vergelung weitgehend zu unterdrücken, werden im Hotmelt-Verfahren üblicherweise sehr reaktionsträge Vernetzer eingesetzt, und zwar erst kurz vor der Beschichtung. Um aber dennoch nach Beschichtung befriedigende Vernetzungsergebnisse zu erzielen, werden weiterhin sogenannte "Beschleuniger" beigemischt.

Auch für aus Lösung beschichtete Polymersysteme, die thermisch vernetzt werden sollen, kann der Einsatz von Beschleunigern sinnvoll sein und wird häufig realisiert. Der thermisch initiierte Vernetzungsvorgang wird üblicherweise verbunden mit der thermischen Entfernung des Lösungsmittels aus der aufgetragenen Schicht (also der Trocknung der Massenschicht). Ein zu schnelles Entfernen des Lösungsmittels führt dabei zu einer schlecht ausgebildeten, ungleichmäßigen und inhomogenen Schicht, da ein zu radikales Trocknen beispielsweise zu Blasenbildung führt. Aus diesem Grund wird die Trocknung daher bei moderaten Temperaturen durchgeführt. Um dennoch auch bei diesen Temperaturen eine gute Vernetzung, die hinreichend schnell verläuft, zu garantieren, sind auch den Lösungsmittelsystemen üblicherweise Beschleuniger zugesetzt.
Eine Beschichtung aus Lösung wird häufig dann bevorzugt, wenn die Dicke der resultierenden Schichten nicht sehr groß ist, so dass eine erhöhte Viskosität der aufzubringenden Polymerlösung (im Vergleich zu einer weitgehend lösemittelfreien Schmelze) nicht mit signifikanten Problemen verbunden ist.

Als Beschleuniger oder auch beschleunigend wirkende Substanz werden insbesondere insbesondere Protonenakzeptoren, Elektronenpaardonatoren (Lewisbasen) und/oder Elektronenpaarakzeptoren (Lewissäuren) eingesetzt. Beschleuniger sind solche Verbindungen oder Chemikalien, die Vernetzungsreaktionen in sofern unterstützen, dass sie für eine erfindungsgemäß hinreichende Reaktionsgeschwindigkeit sorgen. Dies geschieht insbesondere katalytisch (durch Aktivierung der Vernetzungsreaktion) und/oder durch Umwandlung funktioneller Gruppen der Vernetzersubstanzen oder der zu vernetzenden Makromoleküle zu funktionellen Gruppen, die im Sinne einer Verknüpfungsreaktion der Makromoleküle untereinander (Brückenbildung, Netzwerkbildung) untereinander oder mit weiteren funktionellen Gruppen reagieren können.
Die Beschleuniger selbst nehmen nicht an einer solchen Verknüpfungsreaktion teil (vernetzen selbst also nicht), können aber letztendlich selbst, in Form von Reaktionsprodukten oder in Form von Fragmenten in das Netzwerk eingebunden sein oder an dieses geknüpft sein. Der Beschleuniger sorgt also für eine wesentliche Verbesserung der Reaktionskinetik der Vernetzungsreaktion.
Vernetzer hingegen sind solche Substanzen, die durch eigene funktionelle Gruppen an einer Reaktion, insbesondere einer Additions- oder Substitutionsreaktion, teilnehmen können, die zu einer Brückenbildung zur Netzwerkbildung führt, oder die funktionelle Gruppen aufweisen, die - beispielsweise durch die genannte Beschleunigungswirkung oder durch andere Prozessvorgänge - im Rahmen der Vernetzungsreaktion in solche funktionellen Gruppen umgewandelt werden, dass sie zu der entsprechenden Brückenbildung zwischen den Makromolekülen der zu vernetzenden Polymere führen. Die Vernetzungsreaktion in Abwesenheit des Beschleunigers würde bei ausgewählten Reaktionsparametern, hier insbesondere einer Temperatur, die unterhalb der Schmelztemperatur der Polyacrylate liegt, nicht oder nur unzureichend langsam ablaufen. Viele Epoxide, die als Vernetzer eingesetzt werden, sind von Natur aus eher reaktionsträge, so dass sie ohne Beschleuniger zu keinen befriedigenden Vernetzungsergebnissen führen.
Protonendonoren, insbesondere Carbonsäuren bzw. Carbonsäuregruppen bzw. deren deprotonierten Derivate, sind im erfindungsgemäßen Sinne nicht zu den Beschleunigern zu zählen.

Die Anwesenheit von Beschleunigern in Haftklebemassen weist aber auch Nachteile auf. So neigen insbesondere stickstoffhaltige Beschleuniger, wie beispielsweise Amine, durch Oxidationsprozesse mit der Zeit zur Vergilbung, so dass derartige Beschleunigersysteme insbesondere für transparente Haftklebemasse, die beispielsweise für optische Zwecke eingesetzt werden sollen, schlecht oder nicht geeignet sind.
Beschleuniger, die salzartig sind oder Salze bilden (insbesondere basische Beschleuniger), wie etwa die vorgenannten Amine oder auch Zinkchlorid, führen zu einer erhöhten Feuchtigkeitskapazität des Produktes, da Salze in der Regel hygroskopische Eigenschaften besitzen. Insbesondere für Haftklebemassen, die aufgrund des beabsichtigten Einsatzgebietes eine sehr hohe Feuchtwärmebeständigkeit aufweisen sollen, sind derartige Beschleuniger nicht geeignet.

Angestrebt ist daher, die thermische Vernetzung von Polyacrylaten als Haftklebemassen insbesondere für solche Schichten, die in Luftkontakt stehen, zu erzielen, ohne dass Beschleuniger beigemischt sind.

Aufgabe der Erfindung ist es, thermisch vernetzte Polymere (insbesondere Haftklebemassen) auf Acrylatbasis, insbesondere für stark klebende doppelseitige Haftklebebänder, anzubieten. Vorteilhaft sollen die vernetzten Polyacrylate eine sehr geringe Vergilbungsneigung, aber eine hohe Feuchtwärmebeständigkeit aufweisen.

Die Polyacrylate sollen sehr bevorzugt über das Hotmelt-Verfahren herstellbar, verarbeitbar und/oder insbesondere beschichtbar sein und sich dennoch für eine thermische Vernetzung eignen.
Aufgabe der Erfindung ist es weiterhin, stark klebende Klebebänder unter Verwendung der genannten Polyacrylate anzubieten.

Gegenstand der Erfindung ist ein Verfahren zur Vernetzung von Polyacrylaten, insbesondere Polyacrylathaftklebemassen, die durch Polymerisation einer Monomermischung erhältlich sind, die Acrylsäure zu mindestens 5 Gew.-% enthalten, wobei als Vernetzer zur Vernetzung der Polyacrylate zumindest ein Epoxycyclohexylderivat in Abwesenheit von Beschleunigern eingesetzt wird. In dem zu vernetzenden Polymer sind somit keine Beschleuniger, insbesondere keine Protonenakzeptoren, keine Elektronenpaardonatoren (Lewisbasen) und/oder keine Elektronenpaarakzeptoren (Lewissäuren) zugegen, insbesondere nicht zugesetzt worden.
Die Abwesenheit bezieht sich dabei insbesondere auf extern zugesetzte (also nicht einpolymerisierte bzw. in das Polymergerüst eingebaute) Beschleuniger; besonders bevorzugt sind aber weder extern zugesetzte noch einpolymerisierte, sehr bevorzugt gar keine Beschleuniger zugegen.

Vorteilhaft weisen die wie vorstehend vernetzten Polyacrylate einen elastischen Anteil von mehr als 80 %, bevorzugt von mehr als 85 %, sehr bevorzugt von mehr als 90 % auf.

Alle Angaben zum elastischen Anteil beziehen sich auf Werte, die sich gemäß der im experimentellen Teil dieser Schrift dargestellten Messmethode H3 ermitteln lassen; dazu werden die Polymerschichten entsprechend der in den erfindungsgemäßen Klebebändern vorliegenden Polymerschichten als Einzelschichten auf einer 23 µm dicken PET-Folie gemäß der Methode H3 vermessen und der elastische Anteil bestimmt.

Gegenstand der Beschreibung sind weiterhin Klebebänder, umfassend zumindest eine erste, viskoelastische Polymerschicht mit einer Ober- und einer Unterseite sowie mindestens eine zweite Polymerschicht, die insbesondere an die erste Polymerschicht direkt angrenzt, auf der Oberseiten der viskoelastischen Polymerschicht, wobei
- die viskoelastische Polymerschicht auf einem Polyacrylat basiert, das erhältlich ist durch Polymerisation einer Monomerzusammensetzung von
   65 bis 97 Gew.-% Ethylhexylacrylat und/oder Butylacrylat,
   0 bis 30 Gew.-% Methylacrylat,
   3 bis 15 Gew.-% Acrylsäure,
   wobei die viskoelastische Polymerschicht vernetzt ist,
- die zweite Polymerschicht auf einem Polymer basiert, das erhältlich ist durch Polymerisation einer Monomerzusammensetzung von
   85 bis 95 Gew.-% Ethylhexylacrylat und/oder Butylacrylat,
   5 bis 15 Gew.-% Acrylsäure
   wobei die zweite Polymerschicht unter Einsatz eines Epoxycyclohexylderivats in Abwesenheit von Beschleunigern, insbesondere von Protonenakzeptoren, Elektronenpaardonatoren (Lewisbasen) und/oder Elektronenpaarakzeptoren (Lewissäuren), thermisch vernetzt ist.

Da die zweite Polymerschicht zumindest im dargestellten Klebebandverbund nach außen hin haftklebrige Eigenschaften aufweist, wird die zweite Polymerschicht im folgenden auch als Haftklebemassenschicht bezeichnet.

Die Erfindung betrifft doppelseitige Klebebänder, umfassend eine erste, viskoelastische Polymerschicht mit einer Ober- und einer Unterseite (im weiteren für doppelseitige Klebebänder auch als "Zwischenschicht" bezeichnet) sowie eine zweite Polymerschicht auf der Ober- und eine dritte Polymerschicht auf der Unterseite der Zwischenschicht, wobei
- die viskoelastische Zwischenschicht auf einem Polyacrylat basiert, das erhältlich ist durch Polymerisation einer Monomerzusammensetzung von
   65 bis 97 Gew.-% Ethylhexylacrylat und/oder Butylacrylat,
   0 bis 30 Gew.-% Methylacrylat,
   3 bis 15 Gew.-% Acrylsäure,
   wobei die viskoelastische Zwischenschicht vernetzt ist,
- die zweite und dritte Polymerschicht Haftklebemassenschichten sind und auf einem Polymer basierten, das erhältlich ist durch Polymerisation einer Monomerzusammensetzung von
   85 bis 95 Gew.-% Ethylhexylacrylat und/oder Butylacrylat,
   5 bis 15 Gew.-% Acrylsäure
   wobei die zweite und dritte Polymerschicht unter Einsatz eines Epoxycyclohexylderivats in Abwesenheit von Beschleunigern, insbesondere von Protonenakzeptoren, Elektronenpaardonatoren (Lewisbasen) und/oder Elektronenpaarakzeptoren (Lewissäuren), thermisch vernetzt sind und der Epoxycyclohexylderivat-Vernetzer in einer Gesamtmenge von bis zu 0,4 Gew.-Teilen, bezogen auf 100 Gew.-Teile zu vernetzendes Polymer, vorliegt.

Auch hier ist die zweite Polymerschicht eine Haftklebemassenschicht, weist also zumindest im dargestellten Klebebandverbund nach außen hin haftklebrige Eigenschaften auf.
Weiterhin weist die dritte Polymerschicht im doppelseitigen Klebeband sehr bevorzugt klebrige, insbesondere haftklebrige Eigenschaften auf.

Die Klebkraft auf Stahl (alle Angaben zur Klebkraft auf Stahl beziehen sich auf Werte, die sich gemäß des im experimentellen Teil dieser Schrift dargestellten 90°-Klebkrafttest; Messmethode V1; ermitteln lassen) der erfindungsgemäßen Klebebänder auf Seiten der zweiten Polymerschicht (also die Klebkraft auf der Oberseite des Klebebandes) beträgt insbesondere bevorzugt mindestens 10 N/cm oder mehr, besonders bevorzugt mindestens 15 N/cm oder mehr, äußerst bevorzugt 17 N/cm oder mehr.

Die Begriffe Ober- und Unterseite dienen im Rahmen dieser Schrift lediglich zur lokalen Unterscheidung der beiden Oberflächen der ersten Polymerschicht und sollen darüber hinaus keine weiteren Richtungsinformationen enthalten. Auf der "Oberseite" bedeutet also insbesondere auf einer der Seiten der entsprechenden Schicht, auf der Unterseite auf der anderen Seite der entsprechenden Schicht.

Die Unteransprüche betreffen vorteilhafte Weiterentwicklungen und Ausführungen der Erfindung.

Die Beschaffenheit der Polymerschichten und ihre physikalischen Eigenschaften (zum Beispiel Viskoelastizität, Kohäsion, elastischer Anteil) lassen sich durch die Art und den Grad der Vernetzung beeinflussen.

Die Lehre der Erfindung beinhaltet dementsprechend weiterhin die Idee, ein Polyacrylat, insbesondere eine Polyacrylat-Haftklebemasse, mit einem hohen Acrylsäuregehalt (d.h. erhältlich durch Polymerisation einer Monomerzusammensetzung, die mindestens 5 Gew.-% Acrylsäure enthält), thermisch zu vernetzen, und zwar unter Einsatz eines oder mehrerer Epoxycyclohexylderivate insbesondere allein, ggf., aber auch in Kombination mit anderen Vernetzern, jedenfalls aber in Abwesenheit von Beschleunigersubstanzen, insbesondere von Protonenakzeptoren, Elektronenpaardonatoren (Lewisbasen) und/oder Elektronenpaarakzeptoren (Lewissäuren), in der mit dem Epoxycyclohexylderivat zu vernetzenden Schicht.

Mit einem solchen Verfahren lassen sich die zweiten Polymerschichten hervorragend herstellen.

Als besonders vorteilhaft hat es sich herausgestellt, als Vernetzer ein oder mehrere Epoxycyclohexylcarboxylate einzusetzen, insbesondere bevorzugt (3,4-Epoxycyclohexan)methyl-3,4-epoxycyclohexylcarboxylat (CAS 2386-87-0).
Der bzw. die Epoxycyclohexylderivat-Vernetzer liegt in der zu vernetzenden Haftklebemasse bevorzugt in einer Gesamtmenge von bis zu 0,4 Gew.-Teile, sehr bevorzugt bis zu 0,3 Gew.-Teile (jeweils bezogen auf 100 Gew.-Teile zu vernetzendes Polymer [sind der Haftklebemasse keine weiteren Additive oder Füllstoffe zugemischt, also auf 100 Gew.-Teile zu vernetzende Haftklebemasse]), vor. Bei Vernetzermengen von mehr als 0,3 Gew.-Teilen auf 100 Gew.-Teile Polymer ist zunehmend mit Einbußen der Klebkraft zu rechnen. Typische Vernetzermengen liegen beispielsweise im Bereich von 0,15 bis 0,25 Gew.-Teilen, insbesondere bei 0,2 Gew.-Teilen (auf 100 Gew.-Teile Polymer).

Auch die viskoelastische Polyacrylatschicht (die viskoelastsiche Zwischenschicht) ist bevorzugt thermisch vernetzt, was zu einer sehr homogenen Ausbildung der viskoelastischen Schicht führt. Besonders bevorzugt erfolgt die thermische Vernetzung durch Einsatz eines oder mehrerer Glycidylether, insbesondere eines oder mehrerer Polyglycidylether, ganz bevorzugt unter Einsatz von Pentaerythrittetraglycidether (CAS 3126-63-4) als Vernetzer. Die Vernetzung erfolgt insbesondere vorteilhaft in Kombination mit einem Amin oder einem Amid, besonders bevorzugt mit Triethylentetramin (CAS 112-24-3), als Beschleuniger. Der Vernetzer für die viskoelastische Polyacrylatschicht ist dem zu vernetzenden Polyacrylat bevorzugt in einer Menge von bis zu 1,0 Gew.-Teile, sehr bevorzugt bis zu 0,8 Gew.-Teile (bezogen auf 100 Gew.-Teile zu vernetzendes Polymer) zugesetzt. Typische Vernetzermengen liegen beispielsweise im Bereich von 0,1 bis 0,6, insbesondere 0,15 bis 0,5 Gew.-Teilen (bezogen auf 100 Gew.-Teile Polymer).
Der Beschleuniger liegt vorteilhaft in einer Menge von 0,1 bis 0,3 Gew.-Teilen (bezogen auf 100 Gew.-Teile Polymer) vor.
Die Anwesenheit eines Aminbeschleunigers in der viskoelastischen Polyacrylatschicht ist insbesondere bei Drei- oder Mehrschichtaufbauten unkritisch, da die Zwischenschicht in diesen Fällen durch die außenliegenden Klebemassen- bzw. Haftklebemassenschichten von dem Einfluss oxidierender Substanzen wie etwa Luftsauerstoff weitgehend abgeschirmt wird.

Die viskoelastische Polymerschicht kann als sehr hochviskose Flüssigkeit angesehen werden, die unter Druckbelastung das Verhaltens des Fließens (auch als "kriechen" bezeichnet) zeigt. Viskoelastische Polymere im Sinne der erfindungsgemäßen ersten viskoelastischen Polymerschicht weisen bevorzugt bereits durch die Schwerkraft, also unter Belastung durch ihr eigenes Gewicht, die Fähigkeit auf, mehr oder weniger langsam zu fließen und insbesondere auf einen Untergrund aufzufließen. Mindestens aber findet dieser Effekt unter einer externen Druckeinwirkung statt. Eine Druckerhöhung, etwa durch Andrücken des Klebebandes auf einen Untergrund, kann dieses Verhalten deutlich beschleunigen.
Viskoelastische Polymere im Sinne der erfindungsgemäßen ersten viskoelastischen Polymerschicht besitzen weiterhin die Fähigkeit, bei langsamer Krafteinwirkung die auf sie einwirkenden Kräfte zu relaxieren: sie sind in der Lage, die Kräfte in Schwingungen und/oder Verformungen (die insbesondere auch - zumindest zum Teil - reversibel sein können) zu dissipieren, somit die einwirkenden Kräfte "abzupuffern" und eine mechanische Zerstörung durch die einwirkenden Kräfte bevorzugt vermeiden, vorteilhaft aber mindestens aber verringern oder aber den Zeitpunkt des Eintretens der Zerstörung zumindest hinauszögern. Im Falle einer sehr schnell einwirkenden Kraft zeigen viskoelastische Polymere üblicherweise ein elastisches Verhalten, also das Verhalten einer vollständig reversiblen Verformung, wobei Kräfte, die über das Elastizitätsvermögen der Polymere hinausgehen, zu einem Bruch führen können.
Im Gegensatz hierzu stehen elastische Materialien, die auch bei langsamer Krafteinwirkung das beschriebene elastische Verhalten zeigen.

Das erfindungsgemäße doppelseitige, Klebeband weist zu den Klebebändern des Standes der Technik signifikante Unterschied auf:
Durch die thermische Vernetzung weist das Haftklebeband zum einen kein Vernetzungsprofil durch seine Schichten hindurch auf. Viskoelastische Schichten sowie Haftklebemassenschicht, die durch aktinische Strahlung (Ultravioltte Strahlung, Elektronenstrahlen) vernetzt wurden, zeigen ein Vernetzungsprofil durch die jeweilige vernetzte Schicht hindurch auf. Thermisch vernetzte Masseschichten zeigen dieses Verhalten nicht, da die Wärme gleichmäßig in die Schicht eindringen kann.

Die Abwesenheit der Beschleunigersubstanzen kann analytisch nachgewiesen werden (Systeme, die unter Beschleunigeranwesenheit vernetzt wurden, weisen Reste dieser Beschleuniger auf, wie etwa Stickstoffverbindungen im Falle von Aminen oder Amiden als Beschleuniger, Zinkchlorid oder der gleichen).
Zudem konnte nachgewiesen werden, wie im experimentellen Teil dieser Schrift dargestellt wird, dass die mittels Epoxycyclohexylderivaten als Vernetzer thermisch vernetzten Polyacrylathaftklebemassen eine höhere Klebkraft aufwiesen als die mittels anderer Vernetzer vernetzten Systeme. Diese Eigenschaft lässt sich wahrscheinlich zurückführen auf eine spezielle Vernetzungsstruktur. Der vorgenannte Gegenstand unterscheidet sich daher signifikant von den Klebebändern, die nach der Vernetzung mittels anderer Vernetzer geringere Klebkräfte und schlechtere klebtechnische Eigenschaften aufweisen.

Sehr signifikant ist dieser Unterschied für die erfindungsgemäßen Klebebänder. Setzt man eine viskoelastische Schicht der genannten Art ein und rüstet diese auf zumindest einer Seite mit einer mittels zumindest eines Epoxycyclohexylderivats thermisch vernetzten Polyacrylathaftklebemasse der genannten Zusammensetzung aus, so sind Klebkräfte auf dieser Klebebandseite deutlich höher als bei Systemen,
- die die entsprechende Haftklebemasse auf einem elastischen Polymerträger (herkömmliche Folienträger wie beispielsweise PET, PE, PVC) aufweisen,
- oder die den gleichen viskoelastischen Träger, aber eine andere, wenn auch an sich (also beispielsweise mit elastischen Folienuntergründen als Träger) deutlich klebrigere, Haftklebemasse aufweisen.

Überraschenderweise spielt für die Klebkraft des Klebebandes nicht nur die außenliegende Haftklebemasse eine Rolle, sondern gleichfalls der viskoelastische Träger, so dass für die hervorragenden Klebeeigenschaften das Gesamtsystem von Bedeutung ist. Die erfinderische Idee beinhaltet also die Kombination einer viskoelastischen, relativ weichen Polymerschicht mit einer an sich (also beispielsweise mit elastischen Folienuntergründen als Träger) nicht stark haftklebrigen Haftklebemassenschicht, wobei durch Zusammenspiel beider Schichten das Klebeverhalten auf Seiten der Haftklebemassenschicht optimiert wird und somit Klebkräfte erzielt werden, die deutlich höher sind als bei an sich gut haftklebrigen Haftklebemassenschichten (insbesondere solchen, die auf herkömmlichen - insbesondere elastischen - Trägern vorliegen).

Erfindungsgemäß ist es gelungen, eine kohäsive Haftklebemasse mit an sich relativ geringer Klebrigkeit als Haftklebemasse für ein sehr klebkräftiges Klebeband zu verwenden, insbesondere die Außen-Klebkraft einer sehr kohasiven, auf elastischen Trägern vorliegend eher relativ gering klebrigen Polymerschicht (Klebkraft auf Stahl unter diesen Bedingungen < 10 N/cm oder deutlich darunter, etwa beispielsweise < 7 N/cm) dadurch sehr deutlich zu erhöhen (und auf einen Wert von mehr als 10 N/cm, bevorzugt von mehr als 15 N/cm zu steigern), dass angrenzend an diese kohäsive Polymerschicht eine weiche, viskoelastische Polymerschicht vorgesehen ist, wobei auch die viskoelastische Polymerschicht an sich Klebkräfte von unter 10 N/cm, insbesondere von unter 7 N/cm aufweist.
Bei Klebebändern, bei denen die Klebkraft allein auf die außenliegende Haftklebemasse zurückzuführen ist, muss häufig ein Kompromiss zwischen Adhäsion und Kohäsion eingegangen werden (siehe einleitender Teil). Überraschender Weise ist es gelungen, durch Steuerung der Eigenschaften zweier unterschiedlicher Schichten, die einzeln optimiert werden können, hervorragende Gesamteigenschaften zu erzielen.

Erfindungsgemäß ist es gelungen, die Klebkraft des Klebebands auf Stahl auf mehr als das doppelte, bezogen auf die Klebkraft der zweiten Polymerschicht auf Stahl, wenn diese Schicht auf einem herkömmlichen Träger vorliegt, zu erhöhen. Auch bezüglich der Klebkraft der viskoelastischen, ersten Polymerschicht auf Stahl ist die Klebkraft des erfindungsgemäßen Klebebandes auf Stahl mehr als doppelt so hoch. Zudem besitzen die Klebebänder hohe Scherstandzeiten bei hohen Temperaturen (beispielsweise bei 70°C).

Die viskoelastischen Eigenschaften einer Schicht und die kohäsiven Eigenschaften einer weiteren Schicht lassen sich quantitativ über deren elastischen Anteile beschreiben.

Sehr vorteilhaft weist die viskoelastische, erste Polymerschicht einem elastischen Anteil von weniger als 80 %, bevorzugt weniger als 75 % auf; weiter bevorzugt aber von mehr als 50 Gew.-%, mehr bevorzugt von mehr als 60 %.
Sehr vorteilhaft weist die zweite Polymerschicht einen elastischen Anteil von mehr als 80 %, bevorzugt mehr als 85 %, sehr bevorzugt mehr als 90 % auf.
Sehr vorteilhaft weist die dritte Polymerschicht einen elastischen Anteil von mehr als 80 %, bevorzugt mehr als 85 %, sehr bevorzugt mehr als 90 % auf.

Die Beschreibung umfasst daher weiterhin ein zumindest einseitig klebendes, zumindest zweischichtiges Klebeband, gekennzeichnet durch eine erste, viskoelastische Polymerschicht mit einem elastischen Anteil von höchstens 80 % und eine an die erste Polymerschicht angrenzende zweite Polymerschicht, die einen elastischen Anteil von mindestens 80 % oder mehr aufweist.
Die Klebkraft auf Stahl der erfindungsgemäßen Klebebänder auf Seiten der zweiten Polymerschicht beträgt auch hier mindestens 10 N/cm oder mehr, bevorzugt mindestens 15 N/cm oder mehr, besonders bevorzugt 17 N/cm oder mehr.

Grundsätzlich lassen sich sowohl für die viskoelastische, erste Polymerschicht sowie für die zweite und die dritte Polymerschicht unabhängig voneinander alle Polymere einsetzen; insbesondere wenn die Bedingungen für das resultierende Klebeband bezüglich der Klebkräfte nach außen erfüllt werden.

Insbesondere vorteilhaft hat es sich herausgestellt, wenn die viskoelastische, erste Polymerschicht eine solche auf Polyacrylatbasis oder auf Polyurethanbasis ist. Aber auch eine viskoelastische, erste Polymerschicht auf Kautschuk-, insbesondere auf Naturkautschukbasis ist realisierbar und hat zu guten Ergebnissen geführt.

Als Polymere für die zweite und/oder die dritte Polymerschicht lassen sich unabhängig voneinander hervorragend Polyacrylate, Synthesekautschuke (z.B. Styrol-Butadien-Styrol-Kautschuke; Styrol-Isopren-Styrol-Kautschuke, hydrierte Derivate der vorgenannten Kautschuke) und Polymermischungen aus Polyacrylaten und Synthesekautschuken einsetzen.

Besonders bevorzugt sind Klebebänder, bei denen sowohl die erste als auch die zweite Polymerschicht auf Polyacrylat basieren (insbesondere aus einer Monomermischung erhältlich sind, die mindestens 50 %, bevorzugt mindestens 80 %, ganz besonders bevorzugt ausschließlich Acryl- und/oder Methacrylmonomere umfassen), besonders bevorzugt auch die dritte Polymerschicht.

Für die Umsetzung der beschriebenen Idee ist also zumindest ein Zweischichtsystem vorteilhaft, nämlich eine viskoelastische, erste Polymerschicht, vorteilhaft eine solche der in Anspruch 1 beschriebenen Art (also auf einem vernetzten Polymer basierend, das erhältlich ist durch Polymerisation einer Monomerzusammensetzung von 65 bis 97 Gew.-% Ethylhexylacrylat und/oder Butylacrylat, 0 bis 30 Gew.-% Methylacrylat, 3 bis 15 Gew.-% Acrylsäure) sowie einer zweiten Polymerschicht (im folgenden auch als Haftklebemassenschicht bezeichnet, da sie im Klebeband die nach außen haftklebrig wirkende Funktion übernimmt); vorteilhaft eine solche der ebenfalls in Anspruch 1 für diese Schicht beschrieben Art (also auf einem Polymer basierend, das erhältlich ist durch Polymerisation einer Monomerzusammensetzung von 85 bis 95 Gew.-% Ethylhexylacrylat und/oder Butylacrylat und 5 bis 15 Gew.-% Acrylsäure, wobei die Haftklebemassenschicht unter Einsatz eines Epoxycyclohexylderivates thermisch vernetzt ist).
Auf der Rückseite der viskoelastischen Polymerschicht kann zur Stabilisierung bzw. zur Abdeckung beispielsweise ein Liner oder ein herkömmliches Folienmaterial vorgesehen sein, so dass mindestens ein Dreischicht-System umfassend das erfindungsgemäße mindestens zweischichtige Klebesystem vorliegt.
Bei hinreichend dicken viskoelastischen Polymerschichten kann die der Haftklebemassenschicht abgewandte Seite, in Zweischichtsystemen freiliegende Seite der viskoelastischen Polymerschicht, auch dadurch stabilisiert sein, dass sie durch einen Vernetzungsprozess mit einer geringen Eindringtiefe stark vernetzt wird, so dass nur ein Teil der Dicke der viskoelastischen Trägerschicht stark vernetzt wird, während auf der anderen, der Haftklebemassenschicht zugewandten Seite der viskoelastischen Klebeschicht die viskoelastischen Eigenschaften erhalten bleiben.

Für die Anwendung der Klebebänder ist es vorteilhaft, mindestens doppelseitige Klebebänder anzubieten, also mindestens dreischichtige Klebesysteme einzusetzen, bei denen auf der anderen Seite der viskoelastischen, ersten Polymerschicht (auf der der zweiten Polymerschicht (Haftklebemassenschicht) abgewandten Oberfläche der viskoelastischen Polymerschicht) mittelbar oder unmittelbar eine weitere Klebemassenschicht vorgesehen ist.

Für eine sehr vorteilhafte Ausführung des erfindungsgemäßen Klebebandes sind beide Klebemassenschichten Haftklebemassenschichten der genannten Art, also solche, die einen elastischen Anteil von größer als 80 % aufweisen und/oder insbesondere solche, die jeweils auf einem Polymer basieren, das erhältlich ist durch Polymerisation einer Monomerzusammensetzung von 85 bis 95 Gew.-% Ethylhexylacrylat und/oder Butylacrylat und 5 bis 15 Gew.-% Acrylsäure, wobei die Haftklebemassenschicht unter Einsatz eines Epoxycyclohexylderivates thermisch vernetzt sind.
Bei diesen Klebeband-Systemen weisen beide Seiten die vorteilhaften klebtechnischen Eigenschaften auf, so dass diese Systeme beispielsweise für solche doppelseitigen Verklebungen eingesetzt werden können, für die sehr starke Klebkräfte notwendig sind.

In einer Weiterentwicklung sind die zweite und die dritte Polymerschicht (die Haftklebemassen auf beiden Seiten des erfindungsgemäßen doppelseitigen Klebebandes) chemisch, physikalisch oder von ihren Ausmaßen her identisch. Vorteilhaft ist es, wenn die zweite und die dritte Polymerschicht mit identischen Zusätzen (insbesondere funktionelle Zusätze und/oder Füllstoffe) und/oder Zusätzen (insbesondere funktionelle Zusätze und/oder Füllstoffe) in identischer Menge versehen sind (was beinhaltet, dass auch beide Schichten zusatz- und/oder füllstofffrei sein können).
Sehr günstig können auch die zweite und die dritte Schicht vollständig identisch sind (ungeachtet von unwesentlichen Unreinheiten, Produktionsungenauigkeiten und anderen - insbesondere nicht beabsichtigten - Aspekten).

Die Klebkraft auf Stahl der erfindungsgemäßen Klebebänder auf Seiten der dritten Polymerschicht (also die Klebkraft auf der Unterseite des Klebebandes) beträgt insbesondere bevorzugt mindestens 10 N/cm oder mehr, besonders bevorzugt mindestens 15 N/cm oder mehr, äußerst bevorzugt 17 N/cm oder mehr.

Als sehr vorteilhaft hat es sich gezeigt, wenn Haftklebemassenschichten harzfrei sind, der bzw. den Haftklebemasse(n) also keine klebkraftsteigernden Harze beigemischt sind. Als Harze, die Haftklebemassen üblicherweise zur Klebkraftsteigerung zugesetzt werden, gelten beispielweise aliphatische Kohlenwasserstoffharze, aromatische Kohlenwasserstoffharze, alkylaromatische Kohlenwasserstoffharze, Terpenharze, Terpenphenolharze, Kolophoniumharze (insbesondere hydrierte, nichthydrierte oder disproportionierte Kolophoniumharze) funktionelle Kohlenwasserstoffharze, Naturharze und dergleichen. Die erfindungsgemäßen Haftklebemassen zeichnen sich dadurch aus, dass sehr gute Klebeigenschaften auch in Abwesenheit dieser und anderer Klebharze erzielt werden können, obwohl die Haftklebemassen an sich sehr kohäsiv und wenig haftklebrig sind.

In sehr bevorzugter Vorgehensweise wird die erste viskoelastische Polyacrylatschicht durch das Polymer gebildet wird (so dass also die viskoelastische, erste Polymerschicht aus dem Polymer besteht), das erhältlich ist durch Polymerisation einer Monomerzusammensetzung von 65 bis 97 Gew.-% Ethylhexyl-acrylat und/oder Butylacrylat, 0 bis 30 Gew.-% Methylacrylat, 3 bis 15 Gew.-% Acrylsäure, wobei diese Aufzählung vorteilhaft abschließend ist und keine weiteren Monomere im Polymer und/oder keine weiteren Komponenten in der viskoelastischen Polyacrylatschicht vorhanden sind. In einer vorteilhaften Ausführung der Erfindung ist die viskoelastische, erste Polymerschicht auch zusatz- und/oder füllstofffrei.
In vorteilhafter Weise wird eine der Haftklebemassenschichten, werden bevorzugt beide Haftklebemassenschichten, durch jeweils ein Polymer gebildet (so dass also die zweite und/oder die dritte Polymerschicht aus dem Polymer bestehen), das erhältlich ist durch Polymerisation einer Monomerzusammensetzung von 85 bis 95 Gew.-% Ethylhexylacrylat und/oder Butylacrylat und 5 bis 15 Gew.-% Acrylsäure, wobei vorteilhaft auch diese Aufzählung abschließend ist, also keine weiteren Monomere im Polymer und/oder keine weiteren Komponenten der (den) Haftklebemasse(n) vorhanden sind.

Für die viskoelastische Polyacrylatschicht ist es vor Vorteil, wenn das Verhältnis von Ethylhexylacrylat zu Butylacrylat im Bereich von mindestens 1:1, bevorzugt von 2:1 oder darüber liegt.

Für die jeweilige Haftklebemasse ist es von Vorteil, wenn das Verhältnis von Ethylhexylacrylat zu Butylacrylat im Bereich von mindestens 1:1, bevorzugt von 2:1 oder darüber liegt.

Grundsätzlich ist eine unerwünschte Neigung zur Seitenkettenkristallisation desto höher, je größer der Anteile linearer Alkylreste ist und je linearer die Alkylreste sind. Durch das Verhältnis von Ethylhexylacrylat zu Butylacrylat lässt sich auch die Glasübergangstemperatur des Polymeren beeinflussen.

Insbesondere zur Handhabung, zur Lagerung und/oder und zur Anbietung der Klebebänder können diese auf einer oder auch auf beiden Seiten mit einem Trennmaterial (beispielsweise Silikone, Folien, silikonisierte Folien oder Papiere, oberflächenbehandelte Folien oder Papiere oder dergleichen; sogenannte Liner) versehen sein.

Die erfindungsgemäßen Klebebänder können auch weitere Schichten umfassen, wobei es insbesondere vorteilhaft ist, also Mehrschichtsysteme (Schichtenabfolge größer drei) darstellen. Insbesondere vorteilhaft ist es, wenn dabei eine wie beschriebene viskoelastische Schicht unmittelbar oder ggf. mittelbar mit einer wie beschriebenen Haftklebemassenschicht ausgerüstet ist, insbesondere um die in dieser Schrift beschriebene Klebkraftsteigerung und/oder Verbesserung der klebtechnischen Eigenschaften zu gewährleisten.

Die erfindungsgemäßen Haftklebebänder zeichnen sich dadurch aus, dass sie als sehr dicke Produkte hergestellt werden können, die zudem sehr hohe Klebkräfte besitzen. Solche Produkte finden beispielsweise Anwendung in der Baubranche oder bei Verklebungen, wo Unebenheiten oder Hohlräume ausgeglichen werden sollen. Aufgrund des guten Relaxationsverhaltens der viskoelastischen Schicht sind die erfindungsgemäßen Klebebänder geeignet, Krafteinwirkungen, wie mechanische Beanspruchungen, Stöße und dergleichen abzufangen und die Energie zu dissipieren. Die erfindungsgemäßen Klebebänder sind daher auch überall dort sehr geeignet, wo beispielsweise eine stoßdämpfende und/oder eine erschütterungsdämpfende Wirkung gewünscht ist, wie etwa zur Verklebung zerbrechlicher Gegenstände, im Elektronikbereich oder dergleichen. Insbesondere vorteilhaft ist es, die erfindungsgemäßen Klebebänder einzusetzen, wenn Materialien mit unterschiedlichen Wärmeausdehnungskoeffizienten miteinander verklebt werden sollen, da die erfindungsgemäßen Klebebänder durch ihre Relaxationseigenschaften Spannungen dissipieren können, die insbesondere in der Wärme durch ein unterschiedliches Ausdehnungsverhalten der miteinander verklebten Gegenstände bzw. Oberflächen resultieren. Herkömmliche Klebebänder neigen bei stark unterschiedlichem Ausdehnungsverhalten der verklebten Gegenstände häufig zum Versagen, dass heißt es kommt zur Schwächung oder gar zum Bruch der Verklebungsstelle.

Die erfindungsgemäßen Klebebänder können in "üblichen" Klebebanddicken von einigen bis einigen hundert Mikrometern, aber vorteilhaft auch in Dicken von mehr als 300 µm, beispielweise 500 µm oder mehr, 1000 µm oder mehr, 1500 µm oder mehr, 2000 µm oder mehr oder auch 3000 µm oder mehr hergestellt werden. Auch noch dickere Produkte sind realisierbar.

Es wurde festgestellt, dass auf die Klebstärken auf einer jeweiligen Klebebandseite einerseits die Dicke der auf der betreffenden Klebebandseite vorgesehenen Haftklebemassenschicht, andererseits aber auch die Dicke der darunter liegenden viskoelastischen, ersten Polymerschicht einen Einfluss haben, der mehr oder weniger groß ausfallen kann.
Es ist von Vorteil, die zweiten und/oder dritten Polymerschichten, insbesondere die Haftklebemassenschichten; in einer Schichtdicke von bevorzugt bis zu 100 µm, besser von bis zu 75 µm, auszugestalten. Besonders vorteilhaft haben sich Schichtdicken von bis zu 50 µm oder auch geringer herausgestellt. So lassen sich etwa Klebebänder realisieren, die beidseitig mit einer Haftklebemassenschicht von jeweils 50 µm ausgerüstet sind; beispielsweise solche, die eine viskoelastischen Zwischenschicht mit einer Dicke von 400 µm, von 900 µm, von 1400 µm, von 1900 µm oder von 2400 µm aufweisen.

Die für die viskoelastische, erste Polymerschicht, für die zweite Polymerschicht und/oder für die dritte Polymerschicht eingesetzten Polymere weisen unabhängig voneinader bevorzugt jeweils ein gewichtsmittleres Molekulargewicht (GPC; vgl. Messmethode A3) von mindestens M_{w} = 500.000 g/mol, bevorzugt mindestens M_{w} = 700.000 g/mol auf. Ihr gewichtsmittleres Molekulargewicht übersteigt bevorzugt nicht einen Wert von M_{w} = 1.700.000 g/mol.

Die Polymere für die Polymerschichten lassen sich hervorragend durch freie radikalische Polymerisation, bevorzugt in Lösung, gemäß dem Stand der Technik herstellen. Im Falle einer gegebenenfalls nachfolgenden Verarbeitung aus der Schmelze wird das Lösungsmittel nach der Polymerisation abgezogen.

Die viskoelastische, erste Polymerschicht wird bevorzugt aus der Schmelze zur Schicht ausgeformt. Bevorzugt findet eine thermische Vernetzung der Polymerschicht statt.

Die zweite und/oder die dritte Polymerschicht können ebenfalls aus der Schmelze ausgeformt werden, da diese Schichten üblicherweise aber nur in Schichtdicken bis zu 100 µm erzeugt werden, lassen sie sich hervorragend auch aus Lösung beschichten und danach trocknen.

Die thermische Vernetzung der viskoelastischen, ersten Polymerschicht und der zweiten und ggf. dritten Polymerschicht [Haftklebemasseschicht(en)] kann gleichzeitig durchgeführt werden, etwa wenn zweite Polymerschicht und/oder die dritte Polymerschicht auf die noch nicht vernetze erste Polymerschicht beschichtet werden oder diese in einem gemeinsamen Verfahren zusammen zur Schicht ausgeformt werden. Die einzelnen Schichten können aber auch in separaten Verfahren thermisch vernetzt werden, etwa wenn die zweite Polymerschicht und/oder die dritte Polymerschicht auf die bereits thermisch vernetzte erste Polymerschicht beschichtet wird (bzw. werden) und dann thermisch vernetzt wird (bzw. werden), oder wenn die zweite und/oder die dritte Polymerschicht an einem anderen Ort ausgeformt und thermisch vernetzt wird (bzw. werden) - etwa auf einem temporären Träger, wie etwa ein Trennmaterial - und dann auf die bereits vernetzte viskoelastische, erste Polymerschicht aufkaschiert wird (bzw. werden). Insbesondere dafür kann es vorteilhaft sein, die viskoelastische Polymerschicht und/oder die zweite und/oder dritte Polymerschicht chemisch und/oder physikalisch vorzubehandeln, beispielsweise durch Corona- und/oder Plasma-Behandlung und/oder reaktive Corona- und/oder reaktive Plasmabehandlung (Verwendung von Gasen, wie z.B. Stickstoff, Sauerstoff, Fluor und/oder weiteren) und/oder Flammenbehandlung (Flame-Treatment).

Die Herstellung der erfindungsgemäßen doppelseitigen, insbesondere dreischichtigen Klebebänder kann insbesondere auch entsprechend der Darstellung für Drei- bzw. Mehrschichtsysteme in der EP 05 792 143 A1 erfolgen. Die dort beschriebenen Herstellungs- und Beschichtungsverfahren können analog auch für die Klebebänder dieser Schrift angewandt werden; der Offenbarungsgehalt der EP 05 792 143 A1 soll daher als in die hier vorliegende Offenbarung explizit eingeschlossen gelten. Gleiches gilt für die Darstellung der in der EP 05 792 143 A1 beschriebenen Produktaufbauten.

Den Gegenstand der Beschreibung umfassen auch Klebebänder, erhältlich nach einem der in dieser Schrift dargestellten Verfahren und/oder erhältlich nach zumindest einem in den Ansprüchen dargestellten Verfahren; insbesondere solche nach einem der in dieser Schrift dargestellten Verfahren erhältliche und/oder nach zumindest einem in den Ansprüchen dargestellten Verfahren erhältliche Klebebänder, die der Beschreibung in dieser Schrift entsprechen und/oder zumindest einem der Sachansprüche entsprechen.

Die erfindungsgemäßen Klebebänder besitzen eine hohe Transparenz (geringe Neigung zur Vergilbung: die äußeren Schichten sind photoinitiator- und stickstofffrei, und die inneren Schichten sich durch die äußeren Schichten von Sauerstoffeinfluss abgeschirmt.

Insbesondere wenn die hohe Transparenz der Klebebänder für die beabsichtigte Anwendung keine große Rolle spielt, können der viskoelastischen Polymerschicht und/oder einer oder beiden Haftklebemassenschichten Füllstoffe beigemischt sein. Auch zur Einstellung der viskoelastischen Eigenschaften der viskoelastischen Polymerschicht oder zur Einstellung der Eigenschaften der zweiten und/oder der dritten Polymerschicht (Haftklebemassenschichten) kann die Beimischung eines oder mehrer der genannten und/oder weiterer Füllstoffe vorteilhaft sein.
So ist beispielsweise bei einer vorteilhaften Weiterentwicklung der erfindungsgemäßen Klebebänder die viskoelastische Polymerschicht geschäumt. Hierzu ist es vorteilhaft, wenn dem Polymer ein oder mehrer Schäumungsmittel beigegeben sind, die dann zur Schäumung der Polymerschicht genutzt werden können.

Als geeignete Additive insbesondere zur viskoelastischen Polymerschicht bzw. dem Polymer, aus dem diese Schicht hergestellt wird, und/oder als geeignete Additive zu den Haftklebemassenschichten lassen sich beispielsweise Schäumungsmittel einsetzen (so dass letztlich geschäumte Klebebänder, also solche mit geschäumter viskoelastischer Polyacrylatschicht und/oder geschäumten Klebemassenschicht(en) erhalten werden können). Geeignete Schäumungsmittel sind beispielsweise expandierbare polymere Mikrohohlkörper (nicht expandiert und/oder bereits ganz oder teilweise vorexpandiert); insbesondere solche Hohlkörper, die bei Wärme- und/oder anderer Energiezufuhr expandieren können, insbesondere gas- und/oder flüssigkeitsgefüllte Polymerkugeln (deren Hülle beispielsweise aus einem thermoplastischen Material wie Polymethylmethacrylat oder Polystyrol besteht).

Geeignete Additve für eine oder mehrere der Schichten des erfindungemäßen Klebebandes, insbesondere der vioskoelastischen Polymerschicht, sind weiterhin Polymerhohlkugel, Polymervollkugeln, Glashohlkugeln, Glasvollkugeln, keramische Hohlkugeln, keramische Vollkugeln, Kohlenstoffvollkugeln ("Carbon Micro Balloons").

Die Beigabe von Kieselsäuren, vorteilhaft gefällter, mit Dimethyldichlorsilan oberflächenmodifizierter Kieselsäure, kann genutzt werden, um die Wärmescherfestigkeit der entsprechenden Polymerschicht einzustellen (zu erhöhen; auch hier ist insbesondere die Additivierung der viskoelastischen, ersten Polymerschicht von Vorteil). Derartige Kieselsäuren lassen sich auch hervorragend für transparente Produkte verwenden. Insbesondere für transparente Klebebänder ist es günstig, wenn die Kieselsäure bis zu 15 Gew.-Teile, bezogen auf 100 Gew.-Teile Polymer, beigegeben wird. Auch hier ist die Additivierung der viskoelastischen, ersten Schicht bevorzugt.

Die Füllstoffe können aber auch derart gewählt werden, dass sie die Transparenz nicht, nur unwesentlich und/oder für die geplante Anwendung nicht störend beeinflussen. Hierfür werden bevorzugt die vorgenannten und/oder andere Füllstoffe gewählt, deren Ausdehnung so gering ist, dass sie nicht zu einer optischen Beeinträchtigung der entsprechenden Polymerschicht führen.

Die erfindungsgemäßen Klebebänder können hervorragend auch füllstofffrei eingesetzt werden, so dass der viskoelastischen, ersten Polymerschicht und/oder der zweiten und/oder dritten Polymerschicht (Haftklebemassenschichten) keine Füllstoffe und/oder Additive zugesetzt sind.

Die erfindungsgemäßen Klebebänder weisen eine gute Feuchtigkeits- und Feuchtwärmebeständigkeit auf (Abwesenheit von Salzen). Sie besitzen eine sehr hohe Klebkraft; offenbar ist es gelungen, die für gute Klebemassen erforderlichen Eigenschaften des Fließverhaltens und einer guten Kohäsion auf zwei unterschiedliche Schichten zu "verteilen" und somit eine bessere Abstimmung dieser Eigenschaften realisieren zu können. Ein derartiger Effekt war nicht zu erwarten, der Fachmann hätte vielmehr angenommen, dass die Fleißeigenschaften der äußeren Haftklebemassen den wesentlichen Einfluss auf die gesamt-klebtechnischen Eigenschaften nehmen würden. Da aber gute Fließeigenschaften der viskoelastischen Polyacrylatschicht zu einem guten Auffließen des Gesamtproduktes auf des Substrat führen, kann/können die Haftklebemassenschicht(en) mit einer relativ hohen Kohäsion versehen werden, ohne dass die Klebkraft des Klebebandes nachteilig beeinflusst wird.

Die experimentellen Ergebnisse bestätigen eindrucksvoll die vorteilhaften Eigenschaften der erfindungsgemäßen Klebebänder.

Die erfindungsgemäßen insbesondere drei- oder mehrschichtigen Klebebänder (Montageklebebänder) lassen sich besonders gut dort einsetzen, wo starke Klebkräfte gefordert sind, eine gute Alterungs- und Witterungsbeständigkeit benötigt wird (hier insbesondere geringe Neigung zum Vergilben und gute Feuchte- und Wärmebeständigkeit) und/oder wo Unebenheiten und Ungleichmäßigkeiten der Substrate bzw. der Klebefugen ausgeglichen werden sollen. Selbstverständlich lassen sich die erfindungsgemäßen Klebebänder auch dort hervorragend verwenden, wo die Ansprüche geringer sind.

Die erfindungsgemäßen Klebebänder eignen sich besonders gut zur Verklebung von (insbesondere transparenten) Werbeschildern- und/oder Tafeln, für Glaswandverklebungen im Innen- und/oder Außenbereich sowie für Glasscheibenverklebungen im Innen- und/oder Außenbereich.

Andere Anwendungsgebiete, für die sich die erfindungsgemäßen Klebebänder hervorragend eignen, sind zum Beispiel der Gebäudebau-, Gebäudeausbau-, Gebäudeausrüstungs- und der Architekturbereich (jeweils Innen- und/oder Außen), der Heimwerkerbereich, der Modellbau, die Möbelherstellung, die Automobilindustrie, der Schiff- und der Flugzeugbau, die Elektronik- und die Elektroindustrie (beispielsweise für Unterhaltungselektronik, weiße Ware, braune Ware, aufgrund der guten Wärmebeständigkeit auch rote Ware) , der Verkehrsbereich (Straßenbeschilderung und dergleichen), um nur einige zu nennen.

Aufgrund des guten Relaxationsverhaltens der erfindungsgemäßen Klebebänder lassen sie sich hervorragend als oder zur Herstellung von Dämpfungsmodulen (insbesondere für mechanische Einflüsse, wie etwa Stöße, akustische Einflüsse, wie etwa Lärm) einsetzen.

### Experimenteller Teil

Die folgenden beispielhaften Experimente sollen die Erfindung näher erläutern, ohne dass durch die Wahl der angegebenen Beispiele die Erfindung unnötig eingeschränkt werden soll.

### Messmethoden:

### Feststoffgehalt (Messmethode A1):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

### K-Wert (nach FIKENTSCHER) (Messmethpde A2):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

### Gelpermeationschromatographie GPC (Messmethode A3):

Die Angaben des gewichtsmittleren Molekulargewichtes M_{w} und der Polydispersität PD in dieser Schrift beziehen sich auf die Bestimmung per Gelpermeationschromatographie. Die Bestimmung erfolgt an 100 µl klarfiltrierter Probe (Probenkonzentration 4 g/I). Als Eluent wird Tetrahydrofuran mit 0,1 Vol.-% Trifluoressigsäure eingesetzt. Die Messung erfolgt bei 25 °C.
Als Vorsäule wird eine Säule Typ PSS-SDV, 5 µ, 10³ Å, ID 8,0 mm - 50 mm verwendet. Zur Auftrennung werden die Säulen des Typs PSS-SDV, 5 µ, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

### 180° Klebkrafttest (Messmethode H1):

Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180 ° vom Substrat abgezogen. Alle Messungen wurden bei Raumtemperatur durchgeführt.
Die Messergebnisse sind in N/cm angegeben und sind gemittelt aus drei Messungen.

### Scherstandzeit (Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm - 13 mm (Länge - Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigt.
Bei Raumtemperatur wurde ein Gewicht von 1 kg an dem überstehenden Ende des Klebebandes befestigt. Die Messung wird bei Normalklima (23 °C, 55 % Luftfeuchtigkeit) und bei 70 °C in einem Wärmeschrank durchgeführt.
Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

### Mikroschertest (Messmethode H3)

Dieser Test dient der Schnellprüfung der Scherfestigkeit von Klebebändern unter Temperaturbelastung.

### Messprobenpräparation für Mikroschertest:

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13mm · 10mm.
Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

### Mikroschertest:

Das zu messende Probenmuster wird am unteren Ende mit einem Gewicht von 1000 g belastet. Die Prüftemperatur beträgt 40°C, die Prüfdauer 30 Minuten (15 Minuten Belastung und 15 Minuten Entlastung). Die Scherstrecke nach der vorgegebenen Testdauer bei konstanter Temperatur wird als Ergebnis in µm angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)·100 / max].

### 90° Klebkraft Stahl - offene und abgedeckte Seite (Messmethode V1):

Die Bestimmung der Klebkraft Stahl erfolgt bei einem Prüfklima von 23°C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann.

### Dreischichtverbund:

Die dem Prüfuntergrund abgewandte Seite des Dreischichtverbundes wurde dann mit einer 50 µm Aluminiumfolie abgedeckt, wodurch verhindert wird, dass sich das Muster bei der Messung dehnt. Danach erfolgte das Anrollen des Prüfmusters auf den Stahluntergrund. Hierzu wurde das Tape mit einer 2 kg Rolle 5 mal hin und her, bei einer Aufrollgeschwindigkeit von 10 m/min, überrollt. Unmittelbar nach dem Anrollen wurde die Stahlplatte in eine spezielle Halterung geschoben, die es ermöglicht das Muster in einem Winkel von 90 °C senkrecht nach oben abzuziehen. Die Klebkraftmessung erfolgte mit einer Zwick-Zugprüfmaschine. Beim Applizieren der abgedeckten Seite auf die Stahlplatte wird die offene Seite des Dreischichtverbundes zunächst gegen die 50 µm Aluminiumfolie kaschiert, das Trennmaterial entfernt und auf die Stahlplatte geklebt, analog angerollt und vermessen. Die Messergebnisse beider Seiten, offen und abgedeckt, sind in N/cm angegeben und sind gemittelt aus drei Messungen.

### Muster auf 23 µm PET-Folie:

Das einseitige Prüfmuster wurde auf den Stahluntergrund aufgebracht und anschließend mit einer 2 kg Rolle 5 mal mit einer Aufrollgeschwindigkeit von 10 m/min angepresst. Unmittelbar nach dem Anrollen wurde die Stahlplatte in eine spezielle Halterung geschoben, die es ermöglicht das Muster in einem Winkel von 90 °C senkrecht nach oben abzuziehen. Die Klebkraftmessung erfolgte mit einer Zwick-Zugprüfmaschine. Die Messergebnisse sind in N/cm angegeben und sind gemittelt aus drei Messungen.

### Scherstandzeit - offene und abgedeckte Seite (Messmethod V2):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche beträgt 20 mm . 13 mm (Länge. Breite). Vor der Messung wurde die Stahlplatte gereinigt und konditioniert. Dazu wird die Platte zunächst mit Aceton abgewischt und danach 5 Minuten an der Luft liegen gelassen, damit das Lösungsmittel abdampfen kann. Nach dem Verkleben wurde die offene Seite mit einer 50 µm Aluminiumfolie verstärkt und mit einer 2 kg Rolle 2 mal hin und her überrollt. Anschließend wurde eine Gurtschlaufe am überstehenden Ende des Dreischichtverbundes angebracht.
Das Ganze wurde dann an einer geeigneten Vorrichtung aufgehängt und mit 10 N belastet. Die Aufhängvorrichtung ist so beschaffen, dass das Gewicht die Probe in einem Winkel von 179° +/- 1 belastet. Dadurch ist sichergestellt, dass sich der Dreischichtverbund nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 µm Aluminiumfolie verstärkt, das Trennmaterial entfernt und auf die Prüfplatte analog der Beschreibung geklebt. Die Messung wird bei Normalklima (23 °C, 55 % Luftfeuchtigkeit) durchgeführt.

### Wandhakentest (Messmethode V3):

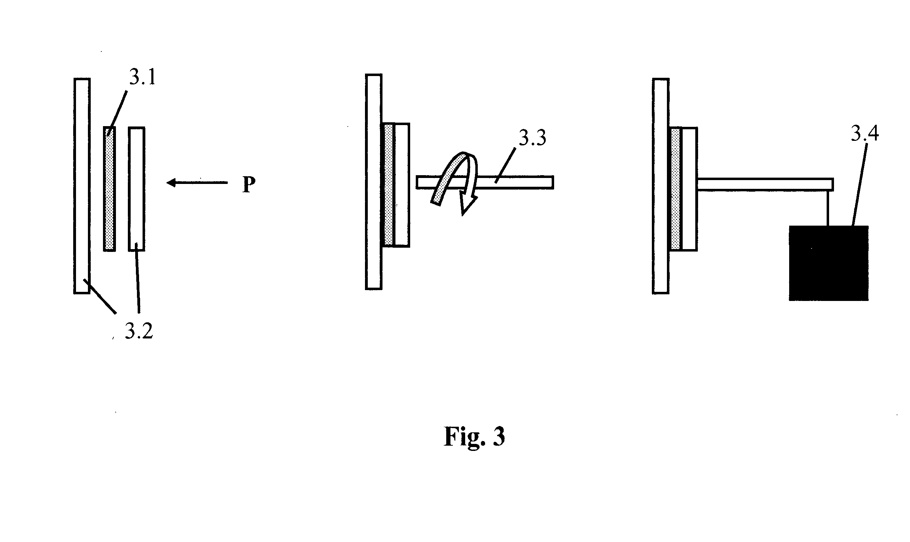

Fig. 3 zeigt die Herstellung der Polyacrylathaftklebeschichten (Schicht A und/oder C). Ein zwischen zwei polierten Stahlplatten (3.2) fixiertes Prüfmuster (3.1) der Größe 30 mm · 30 mm wird 1 Minute lang mit 0,9 kN angedrückt (Kraft P). Danach wird ein 9 cm langer Hebelarm (3.3) in die oberste Stahlplatte eingeschraubt und dieser anschließend mit einem 1000 g Gewicht (3.4) belastet. Es wird darauf achtgegeben, dass die Zeit zwischen Andrücken und Belasten nicht mehr als zwei Minuten beträgt (t ≤ 2 min).

Gemessen wird die Haltezeit, d.h. die Zeit zwischen dem Aufhängen und Abfallen des Musters. Als Ergebnis wird die Haltezeit in Minuten als Mittelwert einer Dreifachbestimmung angegeben. Das Prüfklima beträgt 23 °C +/- 1 °C und 50 % r.F. +/- 5 % r.F (r.F. relativer Feuchte).
Es wurde jeweils die offene und die abgedeckte Seite gemessen.

### Kommerziell erhältliche eingesetzte Chemikalien

| *Chemische Verbindung* | *Handelsname* | *Hersteller* | *CAS-Nr.* |
|---|---|---|---|
| Bis-(4-*tert*-butylcyclohexyl)peroxydicarbonat | Perkadox^{®} 16 | Akzo Nobel | 15520-11-3 |
| 2,2'-Azobis(2-methylpropionitril), AIBN | Vazo^{®} 64 | DuPont | 78-67-1 |
| Pentaerythrittetraglycidether | Polypox^{®} R16 | UPPC AG | 3126-63-4 |
| | Denacol^{™} EX-411 | Nagase Chemtex Corp. | |
| 3,4-Epoxycyclohexylmethyl-3,4-epoxycyclohexancarboxylat | Uvacure^{®} 1500 | Cytec Industries Inc. | 2386-87-0 |
| Triethylentetramin | Epikure^{®} 925 | Hexion Speciality Chemicals | 112-24-3 |
| Aluminium-(III)-acetylacetonat | | Sigma-Aldrich | 13963-57-0 |
| gefällte Kieselsäure mit Dimethyldichlorsilan oberflächenmodifiziert | Aerosil^{®} R 972 | Evonik Industries | 68611-44-9 |

### I. Herstellung der Haftklebemasse PA1 bis PA5

Im Folgenden wird die Präparation der Ausgangspolymere beschrieben. Die untersuchten Polymere werden konventionell über eine freie radikalische Polymerisation in Lösung hergestellt.

### Polyacrylathaftkleber 1 (PA 1):

Ein für radikalische Polymerisationen konventioneller 100 L-Glasreaktor wurde mit 2,0 kg Acrylsäure, 13,0 kg Butylacrylat, 25,0 kg 2-Ethylhexylacrylat und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75°C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Gew.-% Uvacure^{®} 1500 abgemischt, auf einen Feststoffgehalt von 30 % mit Aceton verdünnt und dann aus Lösung auf eine silikonisierte Trennfolie (50 µm Polyester) bzw. auf eine 23 µm dicke geätzte PET-Folie beschichtet. (Beschichtungsgeschwindigkeit 2,5 m/min, Trockenkanal 15 m, Temperaturen Zone 1: 40°C, Zone 2: 70 °C, Zone 3: 95°C, Zone 4: 105°C) Der Masseauftrag betrug 50 g/m².

### Polyacrylathaftkleber 2 (PA 2):

Ein für radikalische Polymerisationen konventioneller 100 L-Glasreaktor wurde mit 4,0 kg Acrylsäure, 12,0 kg Butylacrylat, 24,0 kg 2-Ethylhexylacrylat und 26,7 kg Aceton/ Benzin 60/95 (1:1) befüllt. Nach 45minütiger Durchleitung von Stickstoffgas unter Rühren wurde der Reaktor auf 58°C hochgeheizt und 30 g AIBN hinzugegeben. Anschließend wurde das äußere Heizbad auf 75°C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Gew.-% Uvacure^{®} 1500 abgemischt, auf einen Feststoffgehalt von 30 % mit Aceton verdünnt und dann aus Lösung auf eine silikonisierte Trennfolie (50 µm Polyester) bzw. auf eine 23 µm dicke geätzte PET-Folie beschichtet. (Beschichtungsgeschwindigkeit 2,5 m/min, Trockenkanal 15 m, Temperaturen Zone 1: 40 °C, Zone 2: 70 °C, Zone 3: 95°C, Zone 4: 105°C) Der Masseauftrag betrug 50 g/m².

### Polyacrylathaftkleber 3 (PA 3):

Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Benzin 60/95 (1:1) befüllt. Nach 45minütiger Durchleitung von Stickstoffgas unter Rühren wurde der Reaktor auf 58°C hochgeheizt und 30 g AIBN hinzugegeben. Anschließend wurde das äußere Heizbad auf 75°C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Gew.-% Uvacure^{®} 1500 abgemischt, auf einen Feststoffgehalt von 30 % mit Aceton verdünnt und dann aus Lösung auf eine silikonisierte Trennfolie (50 µm Polyester) bzw. auf eine 23 µm dicke geätzte PET-Folie beschichtet. (Beschichtungsgeschwindigkeit 2,5 m/min, Trockenkanal 15 m, Temperaturen Zone 1: 40°C, Zone 2: 70 °C, Zone 3: 95°C, Zone 4: 105°C) Der Masseauftrag betrug 50 g/m².

### Vergleichsbeispiel Polyacrylathaftkleber 4 (PA 4):

Es wurde die Basismasse PA3 verwendet, die anschließend nach dem Abkühlen mit 0,2 Gew.-% Aluminium-(III)-acetylacetonat (3 %ige Lösung in Isopropanol) abgemischt, auf einen Feststoffgehalt von 30 % mit Aceton verdünnt und dann aus Lösung auf eine silikonisierte Trennfolie (50 µm Polyester) bzw. auf eine 23 µm dicke geätzte PET-Folie beschichtet wurde. (Beschichtungsgeschwindigkeit 2,5 m/min, Trockenkanal 15 m, Temperaturen Zone 1: 40°C, Zone 2: 70 °C, Zone 3: 95°C, Zone 4: 105°C) Der Masseauftrag betrug 50 g/m².

### Vergleichsbeispiel Polyacrylathaftkleber 5 (PA 5):

Es wurde die Basismasse PA3 verwendet, die anschließend nach dem Abkühlen mit 0,25 Gew.-% Polypox^{®} R16 als Vernetzer und 0,18 Gew.-% Epikure 925 als Beschleuniger abgemischt, auf einen Feststoffgehalt von 30 % mit Aceton verdünnt und dann aus Lösung auf eine silikonisierte Trennfolie (50 µm Polyester) bzw. auf eine 23 µm dicke geätzte PET-Folie beschichtet wurde. (Beschichtungsgeschwindigkeit 2,5 m/min, Trockenkanal 15 m, Temperaturen Zone 1: 40°C, Zone 2: 70 °C, Zone 3: 95 °C, Zone 4: 105 °C) Der Masseauftrag betrug 50 g/m².

**Tabelle 1: Kenndaten der Polymere**

| | Tg [°C] | K-Wert | Mn [g/mol] | Mw [g/mol] | D |
|---|---|---|---|---|---|
| PA 1 | -45,2 | 47,5 | 90.452 | 1.501.700 | 16,6 |
| PA 2 | -41,6 | 46,9 | 88.142 | 1.500.900 | 17,0 |
| PA 3 | -39,1 | 46,2 | 85.147 | 1.499.000 | 17,6 |
| PA 4 | -39,1 | 46,2 | 85.142 | 1.499.000 | 17,6 |
| PA 5 | -39,1 | 46,2 | 85.142 | 1.499.000 | 17,6 |

| | | | | | |
|---|---|---|---|---|---|
| Tg = statische Glasübergangstemperatur, D = Mw/Mn = Polydispersität | | | | | |

Zur Messung der klebtechnischen Eigenschaften der Haftklebemasse ohne viskoelastischen Träger wurden die Polymere aus Lösung auf eine 23 µm dicke PET-Folie beschichtet und getrocknet. Anhand der Ergebnisse in Tabelle 2 ist zu erkennen, dass es sich sowohl bei den Haftklebemassen PA 1 - 3 als auch bei den Vergleichshaftklebemasse PA 4 und PA 5 um sehr kohäsive Massen handelt mit einer moderaten Klebkraft auf Stahl. Die nichterfindungsgemäße Vernetzung der Haftklebemasse mittels Koordination der Acrylsäure mit Aluminium-(III)-acetylacetonat bzw. der basisch beschleunigten thermischen Vernetzung mittels eines Glycidylethers führt zu deutlichen Einbussen hinsichtlich der Wärmescherfestigkeit (Scherstandszeiten bei 70°C).

**Tabelle 2: Klebtechnische Daten der Haftklebemasse PA 1 - 5 auf 23 µm PET-Folie**

| | Klebkraft Stahl 180° [N/cm] | Klebkraft Stahl 90° [N/cm] | Scherstandszeiten 23°C [Min] | Scherstandszeiten 70°C [Min] | MSW max [µm] | elastischer Anteil [%] |
|---|---|---|---|---|---|---|
| PA 1 | 5,7 | 6,0 | 5442 | 180 | 532 | 92 |
| PA 2 | 5,8 | 6,1 | > 10.000 | 220 | 470 | 95 |
| PA 3 | 6,3 | 6,6 | > 10.000 | 251 | 416 | 97 |
| PA 4 | 6,3 | 6,6 | > 10.000 | 25 | 450 | 92 |
| PA 5 | 6,3 | 6,6 | > 10.000 | 44 | 297 | 97 |

| | | | | | | |
|---|---|---|---|---|---|---|
| Klebkraft Stahl 180° = Messmethode H1 Klebkraft Stahl 90° = Messmethode V1 Scherstandszeiten 23° und 70°C = Messmethode H2 MSW = Mikroschertest = Messmethode H3 | | | | | | |

### II Herstellung der Ausgangspolymere für die viskoelastischen Träger der Beispiele VT 1 bis 19

Im Folgenden wird die Präparation der Ausgangspolymere beschrieben. Die untersuchten Polymere werden konventionell über eine freie radikalische Polymerisation in Lösung hergestellt.

### Basispolymer HPT 1

Ein für radikalische Polymerisationen konventioneller Reaktor wurde mit 55,2 kg 2-Ethylhexylacrylat, 20,8 kg Methylacrylat, 4,0 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 40 g AIBN zugegeben und nach 4 h wurde mit 10 kg Aceton/Isopropanol-Gemisch (94:6) verdünnt.

Nach 5 sowie nach 7 h wurde jeweils mit 120 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen K-Wert von 59,5, einen Feststoffgehalt von 55,9 %, ein mittleres Molekulargewicht von Mw = 764.000 g/mol, Polydispersität D (Mw/Mn) = 8,6 und eine statische Glasübergangstemperatur von Tg = -40,0°C.

### Basispolymer HPT 2

Ein für radikalische Polymerisationen konventioneller Reaktor wurde mit 54,4 kg 2-Ethylhexylacrylat, 20,0 kg Methylacrylat,5,6 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 40 g AIBN zugegeben und nach 4 h wurde mit 10 kg Aceton/lsopropanol-Gemisch (94:6) verdünnt.

Nach 5 sowie nach 7 h wurde jeweils mit 120 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen K-Wert von 58,8, einen Feststoffgehalt von 55,9 %, ein mittleres Molekulargewicht von Mw = 746.000 g/mol, Polydispersität D (Mw/Mn) = 8,9 und eine statische Glasübergangstemperatur von Tg = -35,6°C.

### Basispolymer HPT 3

Ein für radikalische Polymerisationen konventioneller Reaktor wurde mit 52,4 kg 2-Ethylhexylacrylat, 18,0 kg Methylacrylat,9,6 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 40 g AIBN zugegeben und nach 4 h wurde mit 10 kg Aceton/lsopropanol-Gemisch (94:6) verdünnt.

Nach 5 sowie nach 7 h wurde jeweils mit 120 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen K-Wert von 57,1, einen Feststoffgehalt von 55,9 %, ein mittleres Molekulargewicht von Mw = 714.000 g/mol, Polydispersität D (Mw/Mn) = 7,6 und eine statische Glasübergangstemperatur von Tg = -27,2°C.

### Basispolymer HPT 4

Ein für radikalische Polymerisationen konventioneller Reaktor wurde mit 24,0 kg 2-Ethylhexylacrylat, 53,6 kg Methylacrylat,2,4 kg Acrylsäure und 53,3 kg Aceton/ Isopropanol (96:4) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 40 g AIBN zugegeben und nach 4 h wurde mit 10 kg Aceton/lsopropanol-Gemisch (96:4) verdünnt.

Nach 5 sowie nach 7 h wurde jeweils mit 120 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen K-Wert von 77,8, einen Feststoffgehalt von 55,9 %, ein mittleres Molekulargewicht von Mw = 1.040.000 g/mol, Polydispersität D (Mw/Mn) = 13,3 und eine statische Glasübergangstemperatur von Tg= -45,1 °C.

### Basispolymer HPT 5

Während der Polymerisation von HPT 2 wurden zusätzlich noch 5 Gew.-% (bezogen auf Polymer fest) Aerosil R 972 eingesetzt.

Das Polyacrylat hat einen K-Wert von 58,8, einen Feststoffgehalt von 61,3 %, ein mittleres Molekulargewicht von Mw = 746.000 g/mol, Polydispersität D (Mw/Mn) = 8,9 und eine statische Glasübergangstemperatur von Tg = -43,6°C.

### Basispolymer HPT 6

Während der Polymerisation von HPT 2 wurden zusätzlich noch 10 Gew.-% (bezogen auf Polymer fest) Aerosil R 972 eingesetzt.

Das Polyacrylat hat einen K-Wert von 58,8, einen Feststoffgehalt von 62,4 %, ein mittleres Molekulargewicht von Mw = 746.000 g/mol, Polydispersität D (Mw/Mn) = 8,9 und eine statische Glasübergangstemperatur von Tg = -47,2°C.

### Basispolymer HPT 7

Während der Polymerisation von HPT 2 wurden zusätzlich noch 15 Gew.-% (bezogen auf Polymer fest) Aerosil R 972 eingesetzt.

Das Polyacrylat hat einen K-Wert von 58,8, einen Feststoffgehalt von 62,4 %, ein mittleres Molekulargewicht von Mw = 746.000 g/mol, Polydispersität D (Mw/Mn) = 8,9 und eine statische Glasübergangstemperatur von Tg = -49,7°C.

Zur Verdeutlichung, dass erst die erfindungsgemäße Kombination der kohäsiven, schwach haftklebrigen Haftklebemasse mit dem viskoelastischen, weichen Träger zu einem Klebeband mit sehr guten klebtechnischen Eigenschaften führt, sind in Tabelle 3 die Daten der Polymere, die für den viskoelastischen Träger eingesetzt werden, aufgelistet. Die Muster wurden gemäß Verfahren 1 und 2 als Transferklebeband mit einer Schichtdicke von 900 µm hergestellt. Die Vernetzerkonzentration entspricht den Beispielen MT 1 bis MT 7.

**Tabelle 2: Klebtechnische Daten der Haftklebemasse PA 1 - 5 auf 23 µm PET-Folie**

| | Klebkraft Stahl 180° [N/cm] | Klebkraft Stahl 90° [N/cm] | Scherstandszeiten 23°C [Min] | Scherstandszeiten 70°C [Min] | MSW max [µm] | elastischer Anteil [%] |
|---|---|---|---|---|---|---|
| PA 1 | 5,7 | 6,0 | 5442 | 180 | 532 | 92 |
| PA 2 | 5,8 | 6,1 | > 10.000 | 220 | 470 | 95 |
| PA 3 | 6,3 | 6,6 | > 10.000 | 251 | 416 | 97 |
| PA 4 | 6,2 | 6,5 | > 10.000 | 25 | 450 | 92 |
| PA 5 | 6,3 | 6,6 | > 10.000 | 44 | 297 | 97 |

| | | | | | | |
|---|---|---|---|---|---|---|
| Klebkraft Stahl 180° = Messmethode H1 Klebkraft Stahl 90° = Messmethode V1 Scherstandszeiten 23° und 70°C = Messmethode H2 MSW = Mikroschertest = Messmethode H3 | | | | | | |

### Verfahren 1: Aufkonzentration / Herstellung der Schmelzhaftkleber:

Die Acrylatcopolymere (Basispolymere HPT 1 bis HPT 7) werden mittels Einschneckenextruder (Aufkonzentrationsextruder, Berstorff GmbH, Deutschland) weitestgehend vom Lösemittel befreit (Restlösemittelgehalt ≤ 0,3 Gew.-%; vgl. bei den einzelnen Beispielen).

Exemplarisch sind hier die Parameter der Aufkonzentration des Basispolymeren HPT 1 dargestellt. Die Drehzahl der Schnecke betrug 150 U/min, der Motorstrom 15 A, es wurde ein Durchsatz von 58,0 kg flüssig/h realisiert. Zur Aufkonzentration wurde an 3 verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

### Verfahren 2: Herstellung der erfindungsgemäßen Klebebänder, Abmischung mit dem Vernetzer-Beschleuniger-System für die thermischen Vernetzung und Beschichtung

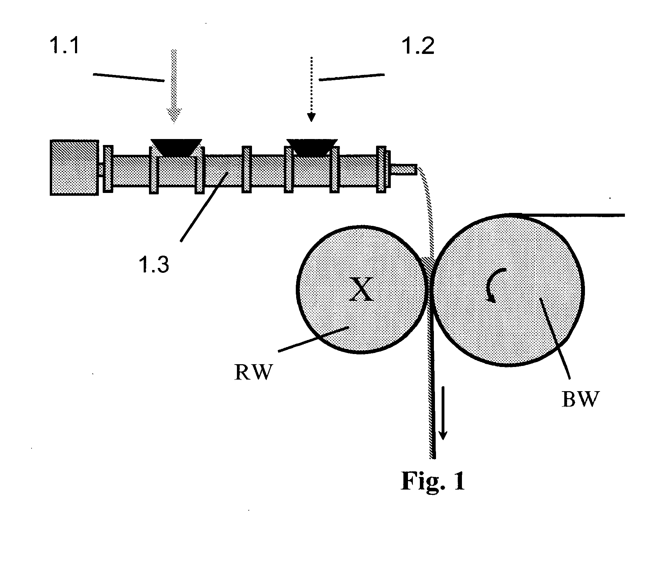

Die nach den Verfahren 1 hergestellten Acrylatschmelzhaftkleber wurden in einem Fütterextruder (Einschneckenförderextruder der Firma TROESTER GmbH & Co KG, Deutschland) aufgeschmolzen und mit diesem als Polymerschmelze in einen Doppelschneckenextruder gefördert (Fa. LEISTRITZ, Deutschland, Bez. LSM 30/34. Das Aggregat wird von außen elektrisch beheizt und über verschiedene Gebläse luftgekühlt und ist so konzipiert, dass bei guter Verteilung des Vernetzer-Beschleuniger-Systems in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Vernetzer und Beschleuniger erfolgt mit geeignetem Dosierequipment gegebenenfalls an mehreren Stellen (Fig.1: Dosierstellen 1.1 und 1.2) und gegebenenfalls unter Verwendung von Dosierhilfsmitteln in die druckfreien Förderzonen des Doppelschneckenextruders.

Nach Austritt der fertig compoundierten, d.h. mit dem Vernetzer-Beschleuniger-System abgemischten Klebmasse aus dem Doppelschneckenextruder (Austritt: Runddüse, 5 mm Durchmesser), erfolgt die Beschichtung nach Fig.1 auf ein bahnförmiges Trägermaterial. Die Zeit zwischen Zudosierung des Vernetzer-Beschleuniger-Systems bis zum Ausformen bzw. Beschichten wird als Verarbeitungszeit bezeichnet. Die Verarbeitungszeit gibt den Zeitraum an, in welcher die mit dem Vernetzer-Beschleuniger-System abgemischte Klebmasse bzw. die viskoelastische Trägerschicht mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze des 2-Walzenauftragswerks wird nicht angetrieben. In den nachfolgenden Beispielen und in den Tabellen 4 bis 7 werden die eingesetzten Formulierungen und die erzielten Eigenschaften jeweils näher beschrieben.

### Verfahren 3: Herstellung der 3-Schichtaufbauten mittels 2-Walzenkalander

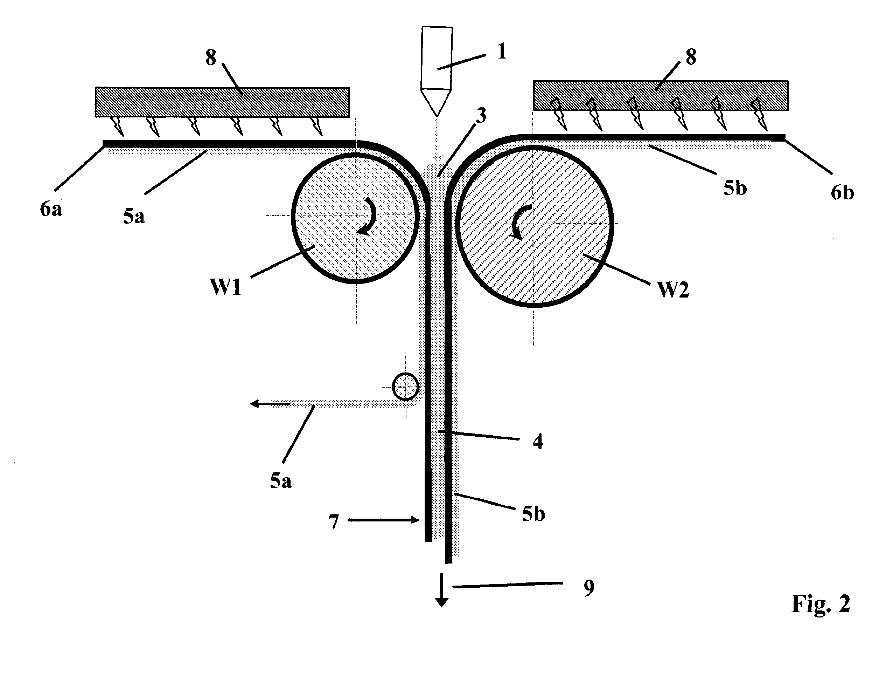

Das Verfahren wurde wie in Fig. 2 beschrieben durchgeführt. Mittels Verteilerdüse (1) wird die mit dem Vernetzer-Beschleuniger-System und ggf. Füllstoffen fertig compoundierte viskoelastische Masse (3) dem Walzenspalt zugeführt. Die Ausformung der viskoelastischen Masse zu einem viskoelastischen Film erfolgt zwischen den Kalanderwalzen (W1) und (W2) im Walzenspalt zwischen zwei Selbstklebemassen (6a, 6b), die ihrerseits auf anti-adhäsiv ausgerüsteten Trägermaterialien (5a, 5b) beschichtet zugeführt werden. Dabei kommt es gleichzeitig zur Ausformung der viskoelastischen Masse auf die eingestellte Schichtdicke und zur Beschichtung mit den beiden zugeführten Selbstklebemassen. Um die Verankerung der Selbstklebemassen (6a, 6b) auf der ausgeformten, viskoelastischen Trägerschicht (4) zu verbessern, werden die Selbstklebemassen vor der Zuführung in den Walzenspalt mittels Corona-Station (8) coroniert (Corona-Anlage der Firma VITAPHONE, Dänemark, 50 W·min/m²). Diese Behandlung führt nach der Herstellung des Dreischichtverbundes zu einer verbesserten chemischen Anbindung an die viskoelastische Trägerschicht.

Die Bahngeschwindigkeit bei Durchlaufen der Beschichtungsanlage beträgt 30 m/min.

Nach Verlassen des Walzenspaltes wird ggf. ein anti-adhäsiver Träger (5a) ausgedeckt und das fertige Dreischichtprodukt (9) mit dem verbleibenden zweiten anti-adhäsiven Träger (5b) aufgewickelt.

Im Folgenden werden konkrete Beispiele zur Herstellung der Selbstklebemassen und Beschichtung der erfindungsgemäßen Klebebänder vorgestellt, ohne dass durch die Wahl der angegebenen Formulierungen, Konfigurationen und Prozessparameter die Erfindung unnötig eingeschränkt werden soll.

### Beispiel MT 1

Das Basispolymer HPT 1 wurde gemäß Verfahren 1 aufkonzentriert (Feststoffgehalt 99,7%) und anschließend gemäß Verfahren 2 im Doppelschneckenextruder kontinuierlich mit dem Vernetzer-Beschleuniger-System bestehend aus Pentaerythrittetraglycidether (Polypox^{®} R16; 0,34 Gew.-% bezogen auf das Polyacrylat) und Triethylentetramin (Epikure^{®} 925; 0,14 Gew.-% bezogen auf das Polyacrylat) compoundiert.

Die Beschichtung zur Erzeugung des viskoelastischen Trägers VT 1 aus dem Basispolymer HPT 1 zwischen die zuvor auf silikonisierte Polyesterfolien beschichtete Masseschichten PA 3 erfolgt am 2-Walzenauftragswerk bei Walzentemperaturen von 100 °C gemäß Verfahren 3. Die Schichtdicke des viskoelastischen Trägers VT 1 betrug 900 µm. Die Coronaleistung betrug 50 W·min/m². Nach 7 Tagen Raumtemperaturlagerung wurden die klebtechnischen Daten jeweils von der offenen und abgedeckten Seite gemessen. Die Daten des Beispiels MT 1 sind in Tabelle 3 zusammengefasst.

### Beispiel MT 2

Das Basispolymer HPT 2 wurde gemäß Verfahren 1 aufkonzentriert (Feststoffgehalt 99,8%) und anschließend gemäß Verfahren 2 im Doppelschneckenextruder kontinuierlich mit dem Vernetzer-Beschleuniger-System bestehend aus Pentaerythrittetraglycidether (Polypox^{®} R16; 0,34 Gew.-% bezogen auf das Polyacrylat) und Triethylentetramin (Epikure^{®} 925; 0,14 Gew.-% bezogen auf das Polyacrylat) compoundiert.

Die Beschichtung zur Erzeugung des viskoelastischen Trägers VT 2 aus dem Basispolymer HPT 3 zwischen die zuvor auf silikonisierte Polyesterfolien beschichtete Masseschichten PA 3 erfolgt am 2-Walzenauftragswerk bei Walzentemperaturen von 100 °C gemäß Verfahren 3. Die Schichtdicke des viskoelastischen Trägers VT 2 betrug 900 µm. Die Coronaleistung betrug 50 W·min/m². Nach 7 Tagen Raumtemperaturlagerung wurden die klebtechnischen Daten jeweils von der offenen und abgedeckten Seite gemessen. Die Daten des Beispiels MT 2 sind in Tabelle 3 zusammengefasst.

### Beispiel MT 3

Das Basispolymer HPT 3 wurde gemäß Verfahren 1 aufkonzentriert (Feststoffgehalt 99,8%) und anschließend gemäß Verfahren 2 im Doppelschneckenextruder kontinuierlich mit dem Vernetzer-Beschleuniger-System bestehend aus Pentaerythrittetraglycidether (Polypox^{®} R16; 0,34 Gew.-% bezogen auf das Polyacrylat) und Triethylentetramin (Epikure^{®} 925; 0,14 Gew.-% bezogen auf das Polyacrylat) compoundiert.

Die Beschichtung zur Erzeugung des viskoelastischen Trägers VT 3 aus dem Basispolymer HPT 3 zwischen die zuvor auf silikonisierte Polyesterfolien beschichtete Masseschichten PA 3 erfolgt am 2-Walzenauftragswerk bei Walzentemperaturen von 100 °C gemäß Verfahren 3. Die Schichtdicke des viskoelastischen Trägers VT 3 betrug 900 µm. Die Coronaleistung betrug 50 W·min/m². Nach 7 Tagen Raumtemperaturlagerung wurden die klebtechnischen Daten jeweils von der offenen und abgedeckten Seite gemessen. Die Daten des Beispiels MT 3 sind in Tabelle 3 zusammengefasst.

### Beispiel MT 4

Das Basispolymer HPT 4 wurde gemäß Verfahren 1 aufkonzentriert (Feststoffgehalt 99,7%) und anschließend gemäß Verfahren 2 im Doppelschneckenextruder kontinuierlich mit dem Vernetzer-Beschleuniger-System bestehend aus Pentaerythrittetraglycidether (Polypox^{®} R16; 0,23 Gew.-% bezogen auf das Polyacrylat) und Triethylentetramin (Epikure^{®} 925; 0,14 Gew.-% bezogen auf das Polyacrylat) compoundiert.

Die Beschichtung zur Erzeugung des viskoelastischen Trägers VT 4 aus dem Basispolymer HPT 4 zwischen die zuvor auf silikonisierte Polyesterfolien beschichtete Masseschichten PA 3 erfolgt am 2-Walzenauftragswerk bei Walzentemperaturen von 100 °C gemäß Verfahren 3. Die Schichtdicke des viskoelastischen Trägers VT 4 betrug 900 µm. Die Coronaleistung betrug 50 W·min/m². Nach 7 Tagen Raumtemperaturlagerung wurden die klebtechnischen Daten jeweils von der offenen und abgedeckten Seite gemessen. Die Daten des Beispiels MT 4 sind in Tabelle 3 zusammengefasst.

### Beispiel MT 5

Das Basispolymer HPT 5 wurde gemäß Verfahren 1 aufkonzentriert (Feststoffgehalt 99,7%) und anschließend gemäß Verfahren 2 im Doppelschneckenextruder kontinuierlich mit dem Vernetzer-Beschleuniger-System bestehend aus Pentaerythrittetraglycidether (Polypox^{®} R16; 0,34 Gew.-% bezogen auf das Polyacrylat) und Triethylentetramin (Epikure^{®} 925; 0,14 Gew.-% bezogen auf das Polyacrylat) compoundiert.

Die Beschichtung zur Erzeugung des viskoelastischen Trägers VT 5 aus dem Basispolymer HPT 5 zwischen die zuvor auf silikonisierte Polyesterfolien beschichtete Masseschichten PA 3 erfolgt am 2-Walzenauftragswerk bei Walzentemperaturen von 100 °C gemäß Verfahren 3. Die Schichtdicke des viskoelastischen Trägers VT 5 betrug 900 µm. Die Coronaleistung betrug 50 W·min/m². Nach 7 Tagen Raumtemperaturlagerung wurden die klebtechnischen Daten jeweils von der offenen und abgedeckten Seite gemessen. Die Daten des Beispiels MT 5 sind in Tabelle 3 zusammengefasst.

### Beispiel MT 6

Das Basispolymer HPT 6 wurde gemäß Verfahren 1 aufkonzentriert (Feststoffgehalt 99,9%) und anschließend gemäß Verfahren 2 im Doppelschneckenextruder kontinuierlich mit dem Vernetzer-Beschleuniger-System bestehend aus Pentaerythrittetraglycidether (Polypox^{®} R16; 0,34 Gew.-% bezogen auf das Polyacrylat) und Triethylentetramin (Epikure^{®} 925; 0,14 Gew.-% bezogen auf das Polyacrylat) compoundiert.

Die Beschichtung zur Erzeugung des viskoelastischen Trägers VT 6 aus dem Basispolymer HPT 6 zwischen die zuvor auf silikonisierte Polyesterfolien beschichtete Masseschichten PA 3 erfolgt am 2-Walzenauftragswerk bei Walzentemperaturen von 100 °C gemäß Verfahren 3. Die Schichtdicke des viskoelastischen Trägers VT 6 betrug 900 µm. Die Coronaleistung betrug 50 W·min/m². Nach 7 Tagen Raumtemperaturlagerung wurden die klebtechnischen Daten jeweils von der offenen und abgedeckten Seite gemessen. Die Daten des Beispiels MT 6 sind in Tabelle 3 zusammengefasst.

### Beispiel MT 7

Das Basispolymer HPT 7 wurde gemäß Verfahren 1 aufkonzentriert (Feststoffgehalt 99,8%) und anschließend gemäß Verfahren 2 im Doppelschneckenextruder kontinuierlich mit dem Vernetzer-Beschleuniger-System bestehend aus Pentaerythrittetraglycidether (Polypox^{®} R16; 0,34 Gew.-% bezogen auf das Polyacrylat) und Triethylentetramin (Epikure^{®} 925; 0,14 Gew.-% bezogen auf das Polyacrylat) compoundiert.

Die Beschichtung zur Erzeugung des viskoelastischen Trägers VT 7 aus dem Basispolymer HPT 7 zwischen die zuvor auf silikonisierte Polyesterfolien beschichtete Masseschichten PA 3 erfolgt am 2-Walzenauftragswerk bei Walzentemperaturen von 100 °C gemäß Verfahren 3. Die Schichtdicke des viskoelastischen Trägers VT 7 betrug 900 µm. Die Coronaleistung betrug 50 W·min/m². Nach 7 Tagen Raumtemperaturlagerung wurden die klebtechnischen Daten jeweils von der offenen und abgedeckten Seite gemessen. Die Daten des Beispiels MT 7 sind in Tabelle 3 zusammengefasst.

### Vergleichsbeispiele B 1 - 7

Zur Verdeutlichung, dass erst die erfindungsgemäße Kombination der kohäsiven, schwach haftklebrigen Haftklebemasse mit dem viskoelastischen, weichen Träger zu einem Klebeband mit sehr guten klebtechnischen Eigenschaften führt, sind in Tabelle 3 die Daten der Polymere, die für den viskoelastischen Träger eingesetzt werden, aufgelistet. Die Muster wurden gemäß Verfahren 1 und 2 mit einer Schichtdicke von 900 µm auf einer 23 µm PET-Folie hergestellt. Die Vernetzerkonzentration entspricht den Beispielen MT 1 bis MT 7.

**Tabelle 4: Klebtechnische Daten der viskoelastischen Träger**

| | Klebkraft Stahl [N/cm] | Scherstandszeiten 23°C [Min] | Scherstandszeiten 70°C [Min] | MSW max 100 g [µm] | elastischer Anteil [%] |
|---|---|---|---|---|---|
| B 1 | 6,7 | 282 | 1 | 325 | 62 |
| B 2 | 6,2 | 321 | 15 | 270 | 65 |
| B 3 | 6,1 | 342 | 22 | 255 | 71 |
| B 4 | 6,2 | 345 | 18 | 265 | 67 |
| B 5 | 6,3 | 312 | 26 | 260 | 67 |
| B 6 | 5,6 | 752 | 85 | 221 | 70 |
| B 7 | 5,3 | 1023 | 122 | 198 | 73 |

| | | | | | |
|---|---|---|---|---|---|
| Klebkraft Stahl = Messmethode H1 Scherstandszeiten 23° und 70°C = Messmethode H2 MSW = Mikroschertest = Messmethode H3 | | | | | |

### Beispiel MT 8 - 11 (Variation der Schichtdicke)

Das Basispolymer HPT 2 wurde gemäß Verfahren 1 aufkonzentriert (Feststoffgehalt 99,7 - 99,9%) und anschließend gemäß Verfahren 2 im Doppelschneckenextruder kontinuierlich mit dem Vernetzer-Beschleuniger-System bestehend aus Pentaerythrittetraglycidether (Polypox^{®} R16; 0,34 Gew.-% bezogen auf das Polyacrylat) und Triethylentetramin (Epikure^{®} 925; 0,14 Gew.-% bezogen auf das Polyacrylat) compoundiert.

Die Beschichtung zur Erzeugung der viskoelastischen Träger VT 8-11 aus dem Basispolymer HPT 2 zwischen die zuvor auf silikonisierte Polyesterfolien beschichtete Masseschichten PA 3 erfolgt am 2-Walzenauftragswerk bei Walzentemperaturen von 100 °C gemäß Verfahren 3. Die Schichtdicke der viskoelastischen Träger VT 8 - 11 betrug 400, 1400, 1900 und 2900 µm. Die Coronaleistung betrug 50 W·min/m². Nach 7 Tagen Raumtemperaturlagerung wurden die klebtechnischen Daten jeweils von der offenen und abgedeckten Seite gemessen. Die Daten der Beispiele MT 8 - 11 sind in Tabelle 5 zusammengefasst.

### Beispiel MT 12 - 15 (Variation der Vernetzerkonzentration im viskoelastischen Träger)

Das Basispolymer HPT 2 wurde gemäß Verfahren 1 aufkonzentriert (Feststoffgehalt 99,7 - 99,9%) und anschließend gemäß Verfahren 2 im Doppelschneckenextruder kontinuierlich mit dem Vernetzer-Beschleuniger-System bestehend aus:
- MT 12:: 0,28 Gew.-% Pentaerythrittetraglycidether (Polypox^{®} R16; bezogen auf das Polyacrylat) und 0,14 Gew.-% Triethylentetramin (Epikure^{®} 925; bezogen auf das Polyacrylat), sowie
- MT 13:: 0,38 Gew.-% Pentaerythrittetraglycidether (Polypox^{®} R16; bezogen auf das Polyacrylat) und 0,14 Gew.-% Triethylentetramin (Epikure^{®} 925; bezogen auf das Polyacrylat),
compoundiert.

Des Weiteren wurde das Basispolymer HPT 4 wurde gemäß Verfahren 1 aufkonzentriert (Feststoffgehalt 99,7 - 99,9%) und anschließend gemäß Verfahren 2 im Doppelschneckenextruder kontinuierlich mit dem Vernetzer-Beschleuniger-System bestehend aus:
- MT 14:: 0,18 Gew.-% Pentaerythrittetraglycidether (Polypox^{®} R16; bezogen auf das Polyacrylat) und 0,14 Gew.-% Triethylentetramin (Epikure^{®} 925; bezogen auf das Polyacrylat), sowie
- MT 13:: 0,28 Gew.-% Pentaerythrittetraglycidether (Polypox^{®} R16; bezogen auf das Polyacrylat) und 0,14 Gew.-% Triethylentetramin (Epikure^{®} 925; bezogen auf das Polyacrylat),
compoundiert.

Die Beschichtung zur Erzeugung der viskoelastischen Träger VT 12-15 aus den Basispolymeren HPT 2 und HPT 4 zwischen die zuvor auf silikonisierte Polyesterfolien beschichtete Masseschichten PA 3 erfolgt am 2-Walzenauftragswerk bei Walzentemperaturen von 100 °C gemäß Verfahren 3. Die Schichtdicke der viskoelastischen Träger VT 12 - 15 betrug 900 µm. Die Coronaleistung betrug 50 W·min/m². Nach 7 Tagen Raumtemperaturlagerung wurden die klebtechnischen Daten jeweils von der offenen und abgedeckten Seite gemessen. Die Daten der Beispiele MT 12 - 15 sind in Tabelle 6 zusammengefasst.

### Beispiel MT 16 - 19 (Variation der Haftklebmasse)

Die Basispolymere HPT 2 und HPT 4 wurden gemäß Verfahren 1 aufkonzentriert (Feststoffgehalt 99,7 - 99,9%) und anschließend gemäß Verfahren 2 im Doppelschneckenextruder kontinuierlich mit dem Vernetzer-Beschleuniger-System bestehend aus Pentaerythrittetraglycidether (Polypox^{®} R16; 0,34 Gew.-% bezogen auf das Polyacrylat) und Triethylentetramin (Epikure^{®} 925; 0,14 Gew.-% bezogen auf das Polyacrylat) compoundiert.

Die Beschichtung zur Erzeugung der viskoelastischen Träger VT 16 - 19 aus den Basispolymeren HPT 2 und HPT 4 zwischen die zuvor auf silikonisierte Polyesterfolien beschichtete Masseschichten PA3, PA 4 und PA 5 erfolgt am 2-Walzenauftragswerk bei Walzentemperaturen von 100 °C gemäß Verfahren 3. Die Schichtdicke der viskoelastischen Träger VT 8 - 19 betrug 900. Die Coronaleistung betrug 50 W·min/m². Nach 7 Tagen Raumtemperaturlagerung wurden die klebtechnischen Daten jeweils von der offenen und abgedeckten Seite gemessen. Zusätzlich wurden die Muster einen Monat bei 60°C und 85 % relative Luftfeuchte gelagert. Die Daten der Beispiele MT 16 - 19 sind in Tabelle 7 zusammengefasst.

**Tabelle 4: Produktaufbau und klebtechnische Daten der Dreischichtaufbauten mit einer Gesamtdicke von 1000 µm**

| Beispiel | Dreischichtprodukt | | | Trägerdicke [µm] | Klebkraft Stahl, [N/cm] | | Scherstandzeit 10 N 23°C [min] | | Wandhakentest [min] | |
|---|---|---|---|---|---|---|---|---|---|---|
| | Haftkleber 1 | Visko elastische Trägerschicht | Haftkleber 2 | | offene Seite | abgedeckte Seite | offene Seite | abgedeckte Seite | offene Seite | abgedeckte Seite |
| **MT 1** | 50 g/m² PA 3 | VT 1 | 50 g/m² PA 3 | 900 | 20,2 | 23,7 | 2018 | 2240 | 198 | 195 |
| **MT 2** | 50 g/m² PA 3 | VT 2 | 50 g/m² PA 3 | 900 | 19,0 | 23,4 | 2210 | 2448 | 252 | 250 |
| **MT 3** | 50 g/m² PA 3 | VT 3 | 50 g/m² PA 3 | 900 | 18,7 | 19,3 | 4500 | 4600 | 320 | 360 |
| **MT 4** | 50 g/m² PA 3 | VT 4 | 50 g/m² PA 3 | 900 | 20,6 | 23,5 | 6620 | 6670 | 4250 | 4320 |
| **MT 5** | 50 g/m² PA 3 | VT 5 | 50 g/m² PA 3 | 900 | 15,7 | 17,6 | > 10000 | > 10000 | 7540 | 7468 |
| **MT 6** | 50 g/m² PA 3 | VT 6 | 50 g/m² PA 3 | 900 | 13,5 | 15,6 | > 10000 | > 10000 | > 10000 | > 10000 |
| **MT 7** | 50 g/m² PA 3 | VT 7 | 50 g/m² PA 3 | 900 | 10,9 | 12,5 | > 10.000 | > 10.000 | > 10.000 | > 10.000 |

| | | | | | | | | | | |
|---|---|---|---|---|---|---|---|---|---|---|
| Klebkraft Stahl = Messmethode V1 Scherstandzeit = Messmethode V2 Wandhakentest = Messmethode V3 | | | | | | | | | | |

**Tabelle 5: Produktaufbau und klebtechnische Daten eines Dreischichtaufbaus mit unterschiedlichen Trägerdicken**

| Beispiel | Dreischichtprodukt | | | Träger -dicke [µm] | Klebkraft Stahl, [N/cm] | | Scherstandzeit 10 N 23°C [min] | | Wandhakentest [min] | |
|---|---|---|---|---|---|---|---|---|---|---|
| | Haftkleber 1 | Viskoelastische Trägerschicht | Haftkleber 2 | | offene Seite | abgedeckte Seite | offene Seite | abgedeckte Seite | offene Seite | abgedeckte Seite |
| **MT 8** | 50 g/m² PA 3 | HPT 2 | 50 g/m² PA 3 | 400 | 15,9 | 17,9 | 1799 | 705 | 2249 | 2500 |
| **MT 2** | 50 g/m² PA 3 | HPT 2 | 50 g/m² PA 3 | 900 | 19,0 | 23,4 | 2210 | 2448 | 252 | 250 |
| **MT 9** | 50 g/m² PA 3 | HPT 2 | 50 g/m² PA 3 | 1400 | 27,6 | 30,1 | 2472 | 1309 | 79 | 85 |
| **MT 10** | 50 g/m² PA 3 | HPT 2 | 50 g/m² PA 3 | 1900 | 29,5 | 32,6 | 2002 | 755 | 25 | 32 |
| **MT 11** | 50 g/m² PA 3 | HPT 2 | 50 g/m² PA 3 | 2900 | 31,4 | 34,7 | 1433 | 468 | 9 | 9 |

**Tabelle 6: Produktaufbau und klebtechnische Daten eines Dreischichtaufbaus mit unterschiedlichen Vernetzerkonzentrationen**

| Beispiel | Dreischichtprodukt | | | Trägerdicke [µm] | Klebkraft Stahl, [N/cm] | | Scherstandzeit 10 N 23°C [min] | | Wandhakentest [min] | |
|---|---|---|---|---|---|---|---|---|---|---|
| | Haftkleber 1 | Viskoelastische Trägerschicht | Haftkleber 2 | | offene Seite | abgedeckte Seite | offene Seite | abgedeckte Seite | offene Seite | abgedeckte Seite |
| **MT 12** | 50 g/m² PA 3 | HPT 2 | 50 g/m² PA 3 | 900 | 25,9 | 27,9 | 729 | 715 | 1249 | 1248 |
| **MT 2** | 50 g/m² PA 3 | HPT 2 | 50 g/m² PA 3 | 900 | 19,0 | 23,4 | 2210 | 2448 | 252 | 250 |
| **MT 13** | 50 g/m² PA 3 | HPT 2 | 50 g/m² PA 3 | 900 | 17,6 | 18,1 | 3573 | 3709 | 3569 | 3855 |
| **MT 14** | 50 g/m² PA 3 | HPT 4 | 50 g/m² PA 3 | 900 | 23,5 | 25,6 | 802 | 755 | 25 | 32 |
| **MT 4** | 50 g/m² PA 3 | HPT 4 | 50 g/m² PA 3 | 900 | 20,6 | 23,5 | 6620 | 6670 | 4250 | 4320 |
| **MT 15** | 50 g/m² PA 3 | HPT 4 | 50 g/m² PA 3 | 900 | 19,4 | 19,7 | > 10.000 | > 10.000 | > 10.000 | > 10.000 |

**Tabelle 7: Produktaufbau und klebtechnische Daten eines Dreischichtaufbaus mit unterschiedlichen Haftklebemasseschichten bei unterschiedlichen Lagerungsbedingungen**

| Beispiel | Dreischichtprodukt | | | Träger -dicke [µm] | Klebkraft Stahl, [N/cm] | | Scherstandzeit 10 N 70°C [min] | | Scherstandszeit nach Feucht-Wärme-Lagerung 10 N 23°C [min] | | Aussehen nach Feucht-Wärme-Lagerung |
|---|---|---|---|---|---|---|---|---|---|---|---|
| | Haftkleber 1 | Viskoelastische Trägerschicht | Haftkleber 2 | | offene Seite | abgedeckte Seite | offene Seite | abgedeckte Seite | offene Seite | abgedeckte Seite | |
| **MT 2** | 50 g/m² PA 3 | HPT 2 | 50 g/m² PA 3 | 900 | 19,0 | 23,4 | 710 | 748 | 2252 | 2250 | transparent |
| **MT 16** | 50 g/m² PA 4 | HPT 2 | 50 g/m² PA 4 | 900 | 20,6 | 22,5 | 20 | 25 | 250 | 320 | trüb |
| **MT 17** | 50 g/m² PA 5 | HPT 2 | 50 g/m² PA 5 | 900 | 19,6 | 20,1 | 33 | 39 | 1569 | 1855 | gelbe Trübung |
| **MT 4** | 50 g/m² PA 3 | HPT 4 | 50 g/m² PA 3 | 900 | 20,6 | 23,5 | 1120 | 1070 | 4250 | 4320 | transparent |
| **MT 18** | 50 g/m² PA 4 | HPT 4 | 50 g/m² PA 4 | 900 | 20,4 | 22,5 | 5 | 7 | 125 | 120 | trüb |
| **MT 19** | 50 g/m² PA 5 | HPT 4 | 50 g/m² PA 5 | 900 | 19,4 | 19,7 | 123 | 152 | 3480 | 4036 | gelbe Trübung |

## Patentansprüche

1. Doppelseitiges Klebeband, umfassend eine viskoelastische, erste Polymerschicht, eine zweite Polymerschicht auf der Ober- und eine dritte Polymerschicht auf der Unterseite der viskoelastischen, ersten Polymerschicht, **dadurch gekennzeichnet, dass**
- die viskoelastische, erste Polymerschicht auf einem Polymer basiert, das erhältlich ist durch Polymerisation einer Monomerzusammensetzung von 65 bis 97 Gew.% Ethylhexylacrylat und/oder Butylacrylat,
0 bis 30 Gew.-% Methylacrylat,
3 bis 15 Gew.-% Acrylsäure,
wobei die viskoelastische Zwischenschicht vernetzt ist,
- die zweite und die dritte Polymerschicht Haftklebemassenschichten sind und auf einem Polymer basieren, das erhältlich ist durch Polymerisation einer Monomerzusammensetzung von
85 bis 95 Gew.-% Ethylhexylacrylat und/oder Butylacrylat,
5 bis 15 Gew.-% Acrylsäure
wobei diese zweite und dritte Polymerschicht unter Einsatz zumindest eines Epoxycyclohexylderivats in Abwesenheit von Beschleunigern thermisch vernetzt sind und der Epoxycyclohexylderivat-Vernetzer in einer Gesamtmenge von bis zu 0,4 Gew.-Teilen, bezogen auf 100 Gew.-Teile zu vernetzendes Polymer, vorliegt.

2. Klebeband nach einem der vorangehenden Ansprüche, **dadurch gekennzeichnet, dass**
die zweite und die dritte Polymerschicht chemisch identisch sind.

3. Klebeband nach einem der vorangehenden Ansprüche, **gekennzeichnet durch** eine Dicke von mindestens
300 µm, bevorzugt von mindestens 500 µm, sehr bevorzugt von mindestens 1000 µm.

4. Klebeband nach einem der vorangehenden Ansprüche, **dadurch gekennzeichnet, dass**
die zweite und/oder die dritte Polymerschicht keinen Zusatz von Klebharzen aufweisen.

5. Klebeband nach einem der vorangehenden Ansprüche, **dadurch gekennzeichnet, dass**
das Epoxycyclohexylderivat zur Vernetzung der Haftklebemassenschicht bzw. der Haftklebemassenschichten ein Epoxycyclohexylcarboxylat, bevorzugt (3,4-Epoxycyclohexan)methyl-3,4-epoxycyclohexylcarboxylat ist.

## Claims

1. Double-sided adhesive tape comprising a viscoelastic, first polymer layer, a second polymer layer on the top face and a third polymer layer on the bottom face of the viscoelastic, first polymer layer, **characterized in that**
- the viscoelastic, first polymer layer is based on a polymer which is obtainable by polymerization of a monomer composition of 65% to 97% by weight of ethylhexyl acrylate and/or butyl acrylate,
0% to 30% by weight of methyl acrylate,
3% to 15% by weight of acrylic acid,
the viscoelastic interlayer being crosslinked,
- the second and third polymer layers are layers of pressure-sensitive adhesive and are based on a polymer which is obtainable by polymerization of a monomer composition of
85% to 95% by weight of ethylhexyl acrylate and/or butyl acrylate,
5% to 15% by weight of acrylic acid,
these second and third polymer layers being thermally crosslinked using at least one epoxycyclohexyl derivative in the absence of accelerators the epoxycyclohexyl derivative crosslinker being present in a total amount of up to 0.4 part by weight, based on 100 parts by weight of polymer to be crosslinked.

2. Adhesive tape according to either of the preceding claims, **characterized in that**
the second and third polymer layers are chemically identical.

3. Adhesive tape according to either of the preceding claims, **characterized by** a thickness of at least
300 µm, preferably of at least 500 µm, very preferably of at least 1000 µm.

4. Adhesive tape according to any of the preceding claims, **characterized in that**
the second and/or third polymer layers have no addition of tackifier resins.

5. Adhesive tape according to any of the preceding claims, **characterized in that**
the epoxycyclohexyl derivative for crosslinking the layer or layers of pressure-sensitive adhesive is an epoxycyclohexylcarboxylate, preferably (3,4-epoxycyclohexane)methyl 3,4-epoxycyclohexylcarboxylate.

## Revendications

1. Bande adhésive double face, comprenant une première couche viscoélastique de polymère, une deuxième couche de polymère sur la face supérieure et une troisième couche de polymère sur la face inférieure de la première couche viscoélastique de polymère, **caractérisée en ce que**
- la première couche viscoélastique de polymère est à base d'un polymère qui peut être obtenu par polymérisation d'une composition de monomères constituée par 65 à 97% en poids d'acrylate d'éthylhexyle et/ou d'acrylate de butyle, 0 à 30% en poids d'acrylate de méthyle, 3 à 15% en poids d'acide acrylique,
la couche viscoélastique intermédiaire étant réticulée,
- la deuxième et la troisième couche de polymère sont des couches de masse autoadhésive et sont à base d'un polymère qui peut être obtenu par polymérisation d'une composition de monomères constituée par 85 à 95% en poids d'acrylate d'éthylhexyle et/ou d'acrylate de butyle, 5 à 15% en poids d'acide acrylique,
cette deuxième et cette troisième couche de polymère étant réticulées thermiquement en utilisant au moins un dérivé d'époxycyclohexyle en l'absence d'accélérateurs et le réticulant de type dérivé d'époxycyclohexyle se trouvant en une quantité totale de jusqu'à 0,4 partie en poids par rapport à 100 parties en poids de polymère à réticuler.

2. Bande adhésive selon l'une quelconque des revendications précédentes, **caractérisée en ce que** la deuxième et la troisième couche de polymère sont chimiquement identiques.

3. Bande adhésive selon l'une quelconque des revendications précédentes, **caractérisée par** une épaisseur d'au moins 300 µm, de préférence d'au moins 500 µm, très préférablement d'au moins 1000 µm.

4. Bande adhésive selon l'une quelconque des revendications précédentes, **caractérisée en ce que** la deuxième et/ou la troisième couche de polymère ne présente(nt) pas d'addition de résines adhésives.

5. Bande adhésive selon l'une quelconque des revendications précédentes, **caractérisée en ce que** le dérivé d'époxycyclohexyle pour la réticulation de la couche de masse autoadhésive ou des couches de masse autoadhésive est un carboxylate d'époxycyclohexyle, de préférence le carboxylate de (3,4-époxycyclohexane)méthyl-3,4-époxycyclohexyle.
